# EUROPÄISCHE PATENTSCHRIFT

(11) **EP 1 642 923 B1**
(45) Veröffentlichungstag und Bekanntmachung des Hinweises auf die Patenterteilung: **05.03.2014**
(21) Anmeldenummer: 05107778.2
(22) Anmeldetag: 24.08.2005
(51) Int. Cl.: C08J 3/14, C08L 77/02

(54) **Pulver mit verbesserten Recyclingeigenschaften, Verfahren zu dessen Herstellung und Verwendung des Pulvers in einem Verfahren zur Herstellung dreidimensionaler Objekte**
Powder with improved recycling properties, process for its preparation and use thereof in a process for manufacturing tridimensional objects
Poudre avec des propriétés de recyclage améliorées, procédé de sa production et son utilisation pour préparer des objets tridimensionnels

(30) Priorität: 01.10.2004 DE 102004047876
(43) Veröffentlichungstag der Anmeldung: 05.04.2006
(73) Patentinhaber: Evonik Degussa GmbH, 45128 Essen (DE)
(72) Erfinder: Monsheimer, Sylvia, 45721, Haltern am See (DE); Simon, Ulrich, 44625, Herne (DE); Grebe, Maik, 44805, Bochum (DE); Baumann, Franz-Erich, Dr., 48249, Dülmen (DE); Christoph, Wolfgang, 45768, Marl (DE); Altkemper, Stefan, 46282, Dorsten (DE)

(56) Entgegenhaltungen:
- EP-A- 0 571 899
- DE-A1- 4 421 454
- DE-A1- 10 330 590
- US-A- 5 605 944
- HARTKOPF U ET AL.: "Zur Statistik des Einbaus einer als Regler in Polyamid 12 verwendeten aliphatischen Dicarbonsäure" DIE ANGEWANDTE MAKROMOL. CHEMIE, Bd. 169, 1989, Seiten 193-209, XP002364880

## Beschreibung

Die zügige Bereitstellung von Prototypen ist eine in der jüngsten Zeit häufig gestellte Aufgabe. Besonders geeignet sind Verfahren, die auf der Basis von pulverförmigen thermoplastischen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Die Verfahren sind auch für die Herstellung von Kleinserien geeignet.

Die Erfindung betrifft ein Verfahren zur Verwendung eines Pulvers auf Basis von difunktional geregeltem Polyamid oder Copolyamid, vorzugsweise Polyamid 12, ein Verfahren zur Verwendung dieses Pulvers sowie Formkörper, hergestellt durch ein schichtweise arbeitendes Verfahren, mit welchem selektiv Bereiche einer Schicht durch Eintrag elektromagnetischer Energie aufgeschmolzen werden, unter Verwendung dieses Pulvers. Die aufgeschmolzenen Bereiche verfestigen sich beim Abkühlen und bilden dabei den gewünschten Formkörper. Überschüssiges Pulvermaterial wird entfernt.

Ein Verfahren, welches besonders gut für den Zweck des Rapid Prototyping bzw. Rapid Manufacturing geeignet ist, ist das Laser-Sintern. Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren nach dem Abkühlen wieder zu einer festen Masse. Durch wiederholtes Belichten von immer neu aufgebrachten Schichten können mit diesem Verfahren komplexe dreidimensionale Körper einfach und schnell hergestellt werden.

Neben dem Lasersintern gibt es jedoch eine Reihe weiterer geeigneter Verfahren. Die Selektivität der schichtweise arbeitenden Verfahren kann dabei über die Auftragung von Suszeptoren, Absorber, Inhibitoren, Masken, oder über fokussierte Energieeinbringung, wie beispielsweise durch einen Laserstrahl oder durch ein Glasfaserkabel erfolgen.

Im Folgenden werden einige Verfahren beschrieben, mit denen aus dem erfindungsgemäßen Pulver erfindungsgemäße Formteile hergestellt werden können, ohne dass die Erfindung darauf beschränkt werden soll.

Das Verfahren des Laser-Sinterns (Rapid Prototyping) zur Darstellung von Formkörpern aus pulverförmigen Polymeren wird ausfährlich in der Patentschriften US 6,136,948 und WO 96/06881 (beide DTM Corporation) beschrieben. Eine Vielzahl von Polymeren und Copolymeren wird für diese Anwendung beansprucht, wie Polyacetat, Polypropylen, Polyethylen, Ionomere und Polyamid 11.

Beim Lasersinterprozess entsteht ein blockartiger Körper, der zum einen aus den gewünschten Bauteilen besteht, zum anderen und meist überwiegenden Teil aus nicht belichtetem Pulver, sogenanntem Rückpulver, welches bis zum Entformen bzw. Auspacken mit den Bauteilen in diesem Block verbleibt. Es hat eine stützende Wirkung auf die Bauteile, so dass Überhänge und Hinterschnitte mit dem Lasersinterverfahren ohne Stützkonstruktionen realisierbar sind. Je nach Art des verwendeten Pulvers kann das nicht belichtete Pulver nach Sieben und Zugabe von Neupulver in einem weiteren Bauprozess eingesetzt werden (Recycling).

In der Praxis hat sich beim Laser-Sintern vor allem Polyamid 12-Pulver für die Herstellung von technischen Bauteilen bewährt. Die aus PA12-Pulver gefertigten Teile genügen hohen mechanischen Beanspruchungen und kommen damit in ihren Eigenschaften besonders nahe an die späteren Serienteile durch Spritzguss oder Extrusion heran.

Besonders gut geeignet ist dabei ein Polyamid 12 mit einer Schmelztemperatur von 185 - 189 °C, einer Schmelzenthalpie von 112 ± 17 kJ/mol und einer Erstarrungstemperatur von 138 - 143 °C, wie es in EP 0 911 142 beschrieben wird. Vorzugsweise werden dabei Pulver mit einer mittleren Korngröße von 50 bis 150 µm eingesetzt, wie man sie beispielsweise gemäß DE 197 08 946 oder auch DE 44 21 454 erhält.

Andere gut geeignete Verfahren sind das SIV-Verfahren wie es in WO 01/38061 beschrieben, oder ein Verfahren wie in EP 1 015 214 beschrieben. Beide Verfahren arbeiten mit einer Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht und die Selektivität wird durch Auftragen eines Suszeptors erreicht. Weitere geeignete Verfahren sind solche, die mit einem Absorber arbeiten, der entweder im Pulver enthalten ist, oder der per Inkjet-Verfahren aufgetragen wird wie in DE 102004012682.8, DE 102004012683.6 und DE 102004020452.7. beschrieben.

Nachteilig beim Stand der Technik ist, dass die nicht belichteten Teile von eingesetztem Polyamid-Pulver unter den im Bauraum der Lasersintermaschine gegebenen Bedingungen (hohe Temperaturen, sehr niedrige Feuchte) zur Nachkondensation neigen.

Die zurückgewonnenen Polyamid- und Copolyamid-Pulver zeigen, wie eigene Untersuchungen ergeben haben, eine deutlich erhöhte Lösungsviskosität nach ISO 307 und lassen sich nur noch eingeschränkt im nächsten Bauprozess einsetzen.

Um gleich bleibend gute Ergebnisse beim Verarbeiten in einer Rapid-Prototyping oder Rapid-Manufacturing-Anlage zu erzielen, wird gemäß dem Stand der Technik das zurückgewonnene Pulver stets mit erheblichen Mengen an Neupulver vermischt. Die erforderlichen Mengen an Neupulver sind erheblich höher als die für die Bauteile verbrauchten Mengen. Daher entsteht ein Überschuss an Rückpulver, der nicht wieder verwendet werden kann und entsorgt werden muss. Gerade bei filigranen Bauteilen fallen auf diese Weise erhebliche Mengen an Rückpulver an, die sich nicht mehr in weiteren Bauprozessen einsetzen lassen.

In DE 103 30 590.4 wird ein Pulver mit verbesserter Recyclingfähigkeit beschrieben, welches auf der Verwendung eines Mono- oder Dicarbonsäure geregelten Polyamids beruht. Nachteilig an diesem Stand der Technik ist eine Verschlechterung der Reißdehnung an den damit hergestellten Teilen. Diese fällt auch schon beim Neupulver auf einen Wert von unter 10 % ab. Dies schränkt die Verwendung als Funktionsprototyp oder gar für die Verwendung im Rapid Manufacturing ein.

In DE 103 305 91.2 wird eine Verbesserung der Recyclingfähigkeit durch die Zugabe von bestimmten Additiven wie beispielsweise Metallseifen erreicht. Nachteilig hierbei ist, dass die damit hergestellten Bauteile zum Teil in Medienkontakt ihre Additive abgeben und für bestimmte Verwendungen, gerade im Lebensmittelkontakt oder Hautkontakt, nur eingeschränkt eingesetzt werden können.

Auch ein einheitlich diamingeregeltes Pulver führt zu unbefriedigenden Ergebnissen. Zwar bleibt hier die Lösungsviskosität in der Wärme annähernd stabil, doch wird wiederholt die Bildung unlöslicher oder vergelter Anteile in der Wärmealterung infolge unbekannter Nebenreaktionen beobachtet.

Aufgabe der vorliegenden Erfindung war es deshalb für die Verwendung in einem schichtweise arbeitenden Verfahren, bei welchem selektiv Bereiche der jeweiligen Schicht aufgeschmolzen werden, ein Pulver bereitzustellen, welches geeignet ist, durch Zugabe von geringen Mengen Neupulver oder sogar ganz ohne Zusatz von Neupulver direkt wieder als Baumaterial eingesetzt zu werden und damit die anfallende Menge an Rückpulver, welches entsorgt werden muss, zu verringern. Dabei sollen die mechanischen Eigenschaften sich nicht gegenüber dem Stand der Technik verschlechtern, und es sollen keine Additive im Medienkontakt abgegeben werden können.

Überraschenderweise wurde nun gemäß den Ansprüchen gefunden, dass sich durch Mischung entgegengesetzt difunktional geregelter Polyamide oder Copolyamide Pulver mit nahezu konstanter Lösungsviskosität herstellen lassen und dass Pulver, welches eine Mischung dieser entgegengesetzt difunktional geregelten Polyamide aufweist, ohne Zugabe von Neupulver oder mit nur geringer Zugabe von Neupulver mehrfach im Rapid-Prototyping- oder Rapid-Manufacturing-Prozess eingesetzt werden können. Im erfindungsgemäßen Pulvergemisch wirkt sich auch die Bildung unlöslicher oder vergelter Anteile nicht mehr störend aus, da die vollständig aufschmelzende Komponente I (s. u.) ein einwandfreies Bauverhalten gewährleistet.

Gegenstand der vorliegenden Erfindung ist deshalb ein Polyamid- oder Copolyamid-Pulver zur Verwendung in einem schichtweise arbeitenden Verfahren, bei welchem selektiv Bereiche der jeweiligen Schicht aufgeschmolzen werden, welches dadurch gekennzeichnet ist, dass es eine Mischung entgegengesetzt difunktional geregelter Polyamid- oder Copolyamid-Pulver, aufweist.

Ebenso ist Gegenstand der vorliegenden Erfindung ist ein Verfahren zur Herstellung von Formkörpern in einem schichtweise arbeitenden Verfahren, bei welchem selektiv Bereiche der jeweiligen Schicht aufgeschmolzen werden, welches dadurch gekennzeichnet ist, dass ein Polymerpulver, welches eine Mischung entgegengesetzt difunktional geregelten Polyamids oder Copolyamids aufweist, eingesetzt wird.

Außerdem sind Gegenstand der vorliegenden Erfindung Formkörper, hergestellt durch ein schichtweise arbeitendes Verfahren, bei welchem selektiv Bereiche der jeweiligen Schicht aufgeschmolzen werden, welche dadurch gekennzeichnet sind, dass sie eine Mischung entgegengesetzt difunktional geregelten Polyamids oder Copolyamids aufweisen.

Das erfindungsgemäße Pulver hat den Vorteil, dass es als Rückpulver nur mit geringen Mengen Neupulver vermischt, oder sogar unvermischt direkt wieder zur Verwendung in einem schichtweise arbeitendes Verfahren, bei welchem selektiv Bereiche der jeweiligen Schicht aufgeschmolzen werden, eingesetzt werden kann. Auf Grund dieser hervorragenden Recycling-Qualitäten ist eine Entsorgung von Rückpulvern häufig nicht mehr notwendig.

Die hervorragenden Recycling-Qualitäten beruhen unter anderem darauf, dass bei thermischer Belastung keine nennenswerte Zunahme der Lösungsviskosität des nicht versinterten Pulvers erfolgt. Dies hängt vermutlich damit zusammen, dass das im erfindungsgemäßen Pulver vorhandene geregelte Polyamid oder Copolyamid weniger zur Nachkondensation neigt als ungeregelte Polyamide. Das gilt innerhalb der verschieden geregelten Körner. Das Phänomen der Nachkondensation gilt prinzipiell für alle Polymere, die durch Kondensation entstanden sind, also Polyester, Polyamide etc.. PA ist in dieser Hinsicht besonders reaktiv: Es wurde festgestellt, dass bei annähernd gleicher Anzahl an Carboxyl- und Aminoendgruppen Nachkondensation eintreten kann und damit die Lösungsviskosität des Polyamids im Bauprozess zunimmt. Unkontrollierte Nebenreaktionen bewirken ferner ausweislich der Endgruppentitration des Gebrauchtpulvers in vielen Fällen einen überstöchiometrischen Verlust an Aminogruppen gegenüber Carboxylgruppen, was als Indiz für thermooxidative Vernetzungsreaktionen gewertet wird, die die Fließfähigkeit des Gebrauchtpulvers weiter beeinträchtigen. Aufgrund der Regelung wird die Nachkondensation innerhalb eines einzelnen Polymerkorns weitgehend verhindert. Über die Korngrenzen hinweg kann im nicht aufgeschmolzenen Bereich ebenfalls keine Nachkondensation stattfinden. Daher bleibt die Lösungsviskosität des Pulvers auch nach der in einer Rapid-Prototyping oder Rapid-Manufacturing auftretenden Temperaturbelastung annähernd stabil und das Pulver kann in einem weiteren Durchgang wieder verwendet werden, ohne dass Einbußen bei den mechanischen Kennwerten oder bei der Oberflächenqualität an den daraus hergestellten Teilen entstehen. In den aufgeschmolzenen Bereichen hingegen kann bei Verwendung von Disäuren und Diaminen als Regler eine Verlängerung der Polymerketten stattfinden, da die entgegengesetzt funktionalen Endgruppen der entgegengesetzt difunktional geregelten Polyamide oder Copolyamide nun in der Schmelze bei ausreichend hoher Temperatur aufeinander treffen. Dies führt zur einer guten Festigkeit über die Schichtgrenzen hinweg und zu sehr guten Bauteileigenschaften bezüglich Elastizitätsmodul und Reißdehnung, aber auch der Dichte.

Herkömmliche, zum Laser-Sintern eingesetzte Neupulver besitzen eine Lösungsviskosität nach ISO 307 von ungefähr ηᵣₑₗ = 1,6. Durch die thermische und thermooxidative Beanspruchung (Nachkondensation + Vernetzung) beim Laser-Sintern über eine Bauzeit von mehreren Stunden- im Extremfall einigen Tagen - zeigt das nicht belichtete Pulver (Rückpulver) in vielen Fällen schlechtere Fließeigenschaften und beim direkten Einsatz dieses Rückpulvers beim Laser-Sintern treten vermehrt Fehlstellen und unerwünschte Poren in den hergestellten Formkörpern auf. Die Formkörper zeigen eine raue und eingefallene Oberfläche (Orangenhaut) und weisen deutlich schlechtere mechanische Eigenschaften bezüglich Reißdehnung, Zugfestigkeit und Elastizitätsmodul sowie eine verringerte Dichte auf.

Um einwandfreie und spezifikationsgerechte Bauteile in gleichbleibender Qualität zu erhalten, muss das Rückpulver gemäß dem Stand der Technik mit nicht unerheblichen Mengen an Neupulver vermischt werden. Üblicherweise wird das Rückpulver in Mengen von 20 - 70 % beim nächsten Bauprozess wieder verwendet. Enthält das Rückpulver zusätzlich Füllstoffe, wie zum Beispiel Glaskugeln, lassen sich üblicherweise maximal 50 % des Rückpulvers einsetzen. Um die oben erwähnte Orangenhaut sicher ausschließen zu können, empfiehlt beispielsweise die Firma EOS in ihrer Produktinformation (Materialdatenblatt "Feinpolyamid PA 2200 für EOSINT P", Stand März 2001) ein Verhältnis von Rückpulver zu Neupulver von 1 : 1, maximal von 2 : 1.

Das erfindungsgemäße verwendete Pulver ist deutlich unempfindlicher gegen die thermische Beanspruchung in einem der eingangs beschriebenen Verfahren und kann deshalb als Rückpulver direkt oder aber mit deutlich geringeren Beimischungen an Neupulver erneut bei einem schichtweise arbeitenden Verfahren, bei welchem selektiv Bereiche der jeweiligen Schicht aufgeschmolzen werden, eingesetzt werden. Dies gilt auch für den Fall, dass das Pulver Füllstoffe oder weitere Additive wie beispielsweise Flammschutzmittel aufweist. In all diesen Fällen zeigt das erfindungsgemäße Pulver deutlich verbesserte Recycling-Eigenschaften. Ein besonderer Vorteil liegt insbesondere darin, dass das Pulver vollständig rückgeführt werden kann.

Die Wiederverwendung von thermisch gealtertem erfindungsgemäßen Pulver ist auch deshalb sehr gut möglich, weil überraschenderweise bei der thermischen Alterung von des erfindungsgemäßem Pulvers keine Abnahme der Rekristallisationstemperatur, ja sogar in vielen Fällen ein Anstieg der Rekristallisationstemperatur festgestellt werden kann. Dadurch wird bei der Verbauung von gealtertem erfindungsgemäßem Pulver ein nahezu gleiches Kristallisationsverhalten erreicht wie mit Neupulver. Bisher übliches gealtertes Pulver kristallisiert erst bei deutlich niedrigeren Temperaturen als Neupulver, weshalb beim Verbauen von Altpulver Einfallstellen auftreten.

Ein weiterer Vorteil des erfindungsgemäßen verwendeten Pulvers liegt darin, dass es sich in beliebigen Mengen (0 bis 100 Teile) mit einem herkömmlichen Pulver auf Basis von ungeregeltem Polyamid, welches häufig für das selektive Lasersintern eingesetzt wird, mischen lässt. Das erhaltene Pulvergemisch zeigt gegenüber dem Pulver auf Basis von ungeregeltem Polyamid einen verminderten Anstieg der Lösungsviskosität und damit ebenfalls eine verbesserte Recyclierbarkeit.

Das erfindungsgemäße Pulver sowie ein Verfahren, bei dem dieses Pulver eingesetzt wird, wird nachfolgend beschrieben, ohne dass die Erfindung darauf beschränkt sein soll.

Das erfindungsgemäße Pulver zur Verwendung in einem schichtweise arbeitenden Verfahren, bei welchem selektiv Bereiche der jeweiligen Schicht aufgeschmolzen werden, zeichnet sich dadurch aus, dass es eine Mischung entgegengesetzt difunktional geregelter Polyamide oder Copolyamide, aufweist. Darunter soll eine Mischung von disäuregeregeltem und diamingeregeltem Polyamid oder Copolyamid verstanden werden. Es kann vorteilhaft sein, wenn das Verhältnis der Aminoendgruppen zu den Carboxylendgruppen in der erfindungsgemäßen Mischung so nah wie möglich bei 1 : 1 liegt.

Die chemische Analyse eines beispielsweise im Laser-Sinter-Prozess thermisch belasteten, herkömmlichen Pulvers zeigt eine deutliche Erhöhung der Lösungsviskosität, bedingt durch einen Molekulargewichtsaufbau sowie eine überstöchiometrische Abnahme der Aminoendgruppen im Verhältnis zu den umgesetzten Carboxylendgruppen. Dieses wird zum Einen dadurch erklärt, dass unter den Bedingungen in einer RM/RP-Maschine freie Aminound Carboxylendgruppen im Polyamid- oder Copolyamid-Pulver miteinander unter Wasserabspaltung reagieren können, die so genannte Nachkondensation. Die Abnahme der Aminofunktionen beruht zum Zweiten auf der thermooxidativen Abspaltung dieser Gruppen mit nachfolgender Vernetzung.

Der dicarbonsaure Regler bewirkt bei der Polymerisation der ersten Mischungskomponente, dass die Anzahl der freien Aminoendgruppen reduziert wird. Deshalb liegen in der ersten erfindungsgemäß zu verwendenden Polyamid- oder Copolyamidkomponente I Carboxylendgruppen im Überschuss vor.

Bei der Polymerisation der zweiten Mischungskomponente hingegen wird ein Diamin als Regler verwendet, der dazu führt, dass die Anzahl der freien Säuregruppen reduziert wird. Deshalb liegen in der zweiten erfindungsgemäß zu verwendenden Polyamid- oder Copolyamidkomponente II Aminoendgruppen im Überschuss vor.

Die Mischung der beiden pulverförmigen Komponenten erfolgt im Dry Blend, beispielsweise in einem schnelllaufenden Mischer.

Vorzugsweise werden die Mengenverhältnisse so eingestellt, dass die Anzahl der Säureendgruppen in Summe in etwa der Anzahl der Aminoendgruppen in Summe über die Komponenten I und II entspricht. Das Verhältnis Säure- zu Aminoendgruppen oder Amino- zu Säureendgruppen in der erfindungsgemäßen verwendeten Pulvermischung beträgt weniger als 5 : 1, bevorzugt weniger als 3 : 1, und besonders bevorzugt 1,5 : 1, und ganz besonders bevorzugt 1 : 1. Die Lösungsviskositäten der Komponenten I und II weicht nach Möglichkeit nicht um mehr als 0,4 voneinander ab, bevorzugt um nicht mehr als 0,2 und ganz besonders bevorzugt um nicht mehr als 0,1. Ein weiteres Vorzugsgebiet besteht, wenn eine Komponente hinsichtlich der Lösungsviskosität absichtlich von der anderen um etwa 0,3 bis 0,4 abweicht, damit die besser fließende Komponente sich um die schlechterfließende wie ein Matrix herumlegen kann und so möglichst lunkerfreie Bauteile produziert werden können.

Die Lösungsviskosität wird bestimmt in 0,5-%iger m-Kresol-Lösung nach DIN 307.

Durch den erfindungsgemäßen Überschuss an Carboxylendgruppen im Polyamid oder Copolyamid der ersten pulverfömigen Komponente bzw. durch den erfindungsgemäßen Überschuss an Aminoendgruppen im Polyamid oder Copolyamid der zweiten pulverfömigen Komponente des Pulvers konnte die Erhöhung der Lösungsviskosität sowie thermooxidativer Endgruppenverlust von Polyamiden oder Copolyamiden im erfmdungsgemäßen Pulver deutlich reduziert, beziehungsweise vermieden werden.

Vorzugsweise weist die erfindungsgemäße erste pulverförmige Komponente ein Polyamid oder Copolyamid auf, welches vorzugsweise 0,01 Teile bis 5 Teile, bevorzugt 0,1 bis 2 Teile einer Dicarbonsäure als Regler aufweist.

Die erfindungsgemäße erste pulverförmige Komponente weist besonders bevorzugt ein Polyamid oder Copolyamid auf, welches ein Verhältnis von Carboxylendgruppe zu Aminoendgruppe von 2 : 1 oder größer aufweist. Der Gehalt an Aminoendgruppen in diesem Polyamid oder Copolyamid kann unter 40 mmol/kg, vorzugsweise unter 20 mmol/kg und ganz bevorzugt unter 10 mmol/kg liegen. Die Lösungsviskosität des Polyamids oder Copolyamids beträgt vorzugsweise nach ISO 307 von 1,4 bis 2,0, besonders bevorzugt von 1,5 bis 1,8, gemessen in 0,5-%iger m-Kresol-Lösung.

Vorzugsweise weist die erfindungsgemäße zweite pulverförmige Komponente ein Polyamid oder Copolyamid auf, welches vorzugsweise 0,01 Teile bis 5 Teile, bevorzugt 0,1 bis 2 Teile eines Diamins als Regler aufweist.

Die erfindungsgemäße zweite pulverförmige Komponente weist besonders bevorzugt ein Polyamid oder Copolyamid auf, welches ein Verhältnis von Carboxylendgruppe zu Aminoendgruppe von 1 : 2 oder größer aufweist. Der Gehalt an Carboxylendgruppen in diesem Polyamid oder Copolyamid kann unter 40 mmol/kg, vorzugsweise unter 20 mmol/kg und ganz bevorzugt unter 10 mmol/kg liegen. Die Lösungsviskosität des Polyamids oder Copolyamids beträgt vorzugsweise nach ISO 307 von 1,4 bis 2,0, besonders bevorzugt von 1,5 bis 1,8, gemessen in m-Kresol.

Das Pulver kann auch eine Mischung aus entgegengesetzt difunktional geregeltem und ungeregeltem Polyamid oder Copolyamid aufweisen. Vorzugsweise weist das Pulver eine Mischung aus entgegengesetzt difunktional geregeltem und ungeregeltem Polyamid auf, wobei der Anteil an geregeltem Polyamid oder Copolyamid in der Mischung von 0,1 bis 99,9 %, vorzugsweise von 5 bis 95 % und ganz besonders bevorzugt von 10 bis 90 % beträgt, weitere Vorzugsbereiche sind 30 bis 70 %, 40 bis 60 % und 20 bis 80 %.. Dadurch, dass das Pulver auch eine Mischung aus entgegengesetzt difunktional geregeltem und ungeregeltem Pulver aufweisen kann, hat ein Anwender der Pulver die Möglichkeit, bei Bedarf Altbestände an ungeregeltem Pulver oder ungeregeltes Rückpulver weiter zu nutzen.

Prinzipiell sind alle Polyamide mit difunktioneller Regelung in den erfindungsgemäßen Pulvern einsetzbar. Es kann aber vorteilhaft sein, wenn das Pulver ein geregeltes Polyamid 12 oder Polyamid 11 aufweist. Insbesondere kann es vorteilhaft sein, wenn das Pulver gefälltes Polyamid 12 aufweist. Die Herstellung von gefälltem Polyamid 12 kann z. B. DE 29 06 647 entnommen werden. Besonders bevorzugt weist das erfindungsgemäße Pulver Polyamid 12 Fällpulver mit runder Kornform auf, wie sie z. B. gemäß DE 197 08 946 oder DE 44 21 454 hergestellt werden können. Ganz besonders bevorzugt weisen die erfindungsgemäßen Pulver, ein geregeltes Polyamid 12 mit einer Schmelztemperatur von 185 bis 189 °C, einer Schmelzenthalpie von 112 ± 17 kJ/mol und einer Erstarrungstemperatur von 138 bis 143 °C, wie es ungeregelt in EP 0 911 142 beschrieben wird, auf.

Ebenso kann vorteilhaft ein Copolyamid in einer oder in beiden Komponenten des erfindungsgemäßen Pulvers eingesetzt werden. Bevorzugt wird ein Copolyamid, bestehend aus mindestens einem der Bausteine aus der Gruppe der Lactame, der Diamin/Dicarbonsäure-Salze, und/oder der Aminocarbonsäuren. Ganz besonders bevorzugt weisen die erfindungsgemäßen Pulver Monomerbausteine aus der Gruppe aus Laurinlactam, Caprolactam, Aminoundecansäure sowie annähernd äquimolare Mengen der aliphatischen Dicarbonsäuren mit 6-22 C-Atomen wie beispielsweise Adipinsäure, Korksäure, Azelainsäure, Sebazinsäure, Dodecandisäure, Brassylsäure, Tetradecandisäure, Pentadecandisäure, Octadecandisäure oder der aliphatischen Diamine mit 10 bis 16 C-Atomen wie beispielsweise Hexamethylendiamin, 2-Methylpentamethylendiamin, 2,2,4- bzw. 2,4,4-Trimethylhexamethylendiamin, Decamethylendiamin, Dodecamethylendiamin. Neben aliphatischen Dicarbonsäuren finden aromatische Dicarbonsäuren Verwendung, die in der Regel zu höheren Glasübergangstemperaturen beitragen wie beispielsweise Terephthalsäure oder Isophthalsäure. Neben aliphatischen Diaminen finden auch aromatische Diamine Verwendung wie beispielsweise Isophorondiamin, Piperazin, Bis-(4-Aminocyclohexyl)-methan. Es kann sich dabei auch um die entsprechenden Salze handeln.

Insbesondere sind Kombinationen aus Caprolactam, Laurinlactam und AH-Salz bekannt, aber auch aus Caprolactam, Laurinlactam und DH-Salz, oder Caprolactam und Laurinlactam. Diese Copolyamide zeichnen sich insbesondere durch einen niedrigen Schmelzpunkt aus. Niedrig symmetrische Comonomere, insbesondere Trimethylhexamethylendiamin (TMD, Isomerengemisch), Isophorondiamin (IPD), Bis-(4-amino-cyclohexyl)-methan (PACM, Isomerengemisch), reduzieren darüber hinaus die Kristallinität - im Extremfall entsteht ein völlig amorphes Copolyamid - was zu höherer Maßhaltigkeit und gegebenenfalls erhöhter Transluzenz der Formkörper führt. Geeignete weitere Comonomere und Regeln zu ihrer Auswahl sind dem Fachmann bekannt und beispielsweise in J. G. Dolden, Polymer (1976, 17), pp 875-892 beschrieben.

Das erfindungsgemäße, zumindest zwei Komponenten mit entgegengesetzt difunktionaler Regelung aufweisende Pulver weist vorzugsweise Polyamid oder Copolyamid mit einer mittleren Partikelgröße d₅₀ von 10 bis 250 µm, vorzugsweise von 30 bis 100 µm und ganz besonders bevorzugt von 40 bis 80 µm auf. Die BET-Oberfläche liegt vorzugsweise unterhalb von 15 m²/g, bevorzugt kleiner als 10 m²/g, und besonders bevorzugt kleiner als 6m²/g. Die Kornverteilung kann eng oder breit oder auch bimodal sein.

Zur Verbesserung der Verarbeitungsfähigkeit oder zur weiteren Modifikation des Pulvers können diesem anorganische Fremdpigmente, wie z.B. Übergangsmetalloxide, Stabilisatoren, wie z.B. Phenole, insbesondere sterisch gehinderte Phenole, Verlaufs- und Rieselhilfsmittel, wie z.B. pyrogene Kieselsäuren sowie Füllstoffpartikel oder weitere Additive zugegeben werden. Besonders seien Ruße und Titandioxid als Pigmente genannt. Vorzugsweise wird, bezogen auf das Gesamtgewicht an Polymeren im Pulver, so viel dieser Stoffe zugegeben, dass die für das erfindungsgemäße Pulver angegeben Konzentrationen für Füllstoffe und Additive eingehalten werden.

Das erfindungsgemäße, zumindest zwei Komponenten mit entgegengesetzt difunktionaler Regelung aufweisende Pulver weist bevorzugt nach einer Wärmealterung des Pulvers eine Rekristallisationstemperatur (Rekristallisationspeak in der DSC-Abkühlkurve, gemessen nach ISO 11357 mit 20 K/min Abkühlrate) und/oder eine Kristallisationsenthalpie auf, die sich nicht zu kleineren Werten gegenüber dem Neupulver verschiebt. Unter Wärmealterung wird dabei ein Aussetzen des Pulvers für wenige Minuten bis mehrere Tage einer Temperatur im Bereich der Rekristallisationstemperatur bis wenige Grade unterhalb der Schmelzetemperatur verstanden. Eine typische künstliche Alterung kann z. B. bei einer Temperatur, die mit einer Abweichung von ca. plusminus 5 K der Rekristallisationstemperatur entspricht, für 5 bis 10, vorzugsweise für 7 Tage erfolgen. Eine Alterung beim Verbauen des Pulvers erfolgt typischerweise bei einer Temperatur von 1 bis 15, vorzugsweise von 3 bis 10 K unterhalb der Schmelzetemperatur für wenige Minuten bis zu zwei Tagen, je nachdem wie lange die Bauzeit für das jeweilige Bauteil beträgt. Die Wärmealterung geschieht bei den oben beschriebenen RP-und RM-Verfahren dadurch, dass Pulver, welches beim schichtweisen Aufbau des dreidimensionalen Objekts nicht aufgeschmolzen wird, während des Bauvorgangs im Bauraum Temperaturen von nur wenigen Grad unterhalb der Schmelzetemperatur ausgesetzt werden. Bevorzugtes erfmdungsgemäßes geregeltes Pulver weist nach Wärmealterung des Pulvers eine Rekristallisationstemperatur (einen Rekristallisationspeak) und/oder eine Kristallisationsenthalpie auf, die sich zu größeren Werten hin verschiebt. Vorzugsweise verschieben sich sowohl die Rekristallisationstemperatur als auch die Kristallisationsenthalpie zu größeren Werten. Ganz besonders bevorzugt weist ein erfindungsgemäßes Pulver, welches als Neupulver eine Rekristallisationstemperatur größer 138 °C aufweist, eine Rekristallisationstemperatur als Altpulver, welches durch Alterung für 7 Tage bei 135 °C erhalten wurde, auf, die von 0 bis 3, vorzugsweise von 0,1 bis 1 K über der Rekristallisationstemperatur des Neupulvers liegt.

Das erfindungsgemäße, zumindest zwei Komponenten mit entgegengesetzt difunktionaler Regelung aufweisende Pulver kann neben zumindest den entgegengesetzt difunktional geregelten Polyamid- oder Copolyamidkomponenten zumindest einen weiteren Füllstoff oder Additiv aufweisen. Solche Füllstoffe können z. B. Glas-, Metall- oder Keramikpartikel, aber auch Flammschutzmittel sein. Insbesondere kann das Pulver Glaskugeln, Alugrieß, Stahlkugeln oder Metallgrieß als Füllstoffe aufweisen.

Die Füllstoff- oder Additivpartikel weisen dabei vorzugsweise eine kleinere oder ungefähr gleich große mittlere Partikelgröße wie die Partikel der Polyamide oder Copolyamide auf. Vorzugsweise sollte die mittlere Partikelgröße d₅₀ der Füllstoffe oder Additive die mittlere Partikelgröße d₅₀ der Polyamide oder Copolyamide um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Schichtdicke in der jeweiligen RPoder RM-Apparatur. Ein weiterer Vorzugsbereich liegt bei Partikelgrößen für die Füllstoffe bzw. Additive unterhalb von 20 µm, bevorzugt unterhalb 15 µm. Vorzugsweise weist erfindungsgemäßes das Pulver weniger als 75 Gew.-%, bevorzugt von 0,001 bis 70 Gew.-%, besonders bevorzugt von 0,05 bis 50 Gew.-% und ganz besonders bevorzugt von 0,5 bis 40 Gew.-% solcher Füllstoffe bzw. Additive, bezogen auf die Summe der vorhandenen Polymere, auf.

Beim Überschreiten der angegebenen Höchstgrenzen für Additive und/oder Füllstoffe kann es, je nach eingesetztem Füllstoff oder Additiv zu deutlichen Verschlechterungen der mechanischen Eigenschaften von Formkörpern kommen, die mittels solcher Copolymerpulver hergestellt wurden.

Das erfindungsgemäße, zumindest zwei Komponenten mit entgegengesetzt difunktionaler Regelung aufweisende Pulver wird vorzugsweise durch das im Folgenden beschriebene Verfahren zur Herstellung eines Pulvers hergestellt. Bei diesem Verfahren wird ein Pulver auf Basis zweier Polyamide oder Copolyamide hergestellt, wobei die Polyamide oder Copolyamide entgegengesetzt difunktional geregelt sind, das heißt, dass die erste Komponente einen Carboxylendgruppenüberschuss und die zweite Komponente einen Aminoendgruppenüberschuss aufweist. Es wurde überraschend gefunden, dass man ein vollständig rückführbares Pulver erhält, welches in den Baueigenschaften nahezu einem Neupulver entspricht, wenn man für die Pulverherstellung des Neupulvers von Polyamiden oder Copolyamiden mit zwei entgegengesetzt difunktional geregelten Komponenten ausgeht.

Die erste Polyamid- oder Copolyamidkomponente weist vorzugsweise von 0,01 Teile bis 5 Teile, bevorzugt 0,1 bis 2 Teile einer Dicarbonsäure als Regler auf. Vorzugsweise weist die erste Komponente des erfindungsgemäßen Pulvers ein Verhältnis von Carboxylendgruppe zu Aminoendgruppe von 2 : 1 oder größer, vorzugsweise von 5 : 1 bis 500 : 1 und besonders bevorzugt von 10 : 1 bis 50 : 1 auf. Es kann vorteilhaft sein, wenn in der ersten Komponente ein Polyamid oder Copolyamid zur Herstellung des erfindungsgemäßen Pulvers eingesetzt wird, welches einen Gehalt an Aminoendgruppen von kleiner 40 mmol/kg Polyamid, vorzugsweise kleiner 20 mmol/kg Polyamid und ganz bevorzugt kleiner 10 mmol/kg Polyamid aufweist.

Die zweite Polyamid- oder Copolyamidkomponente weist vorzugsweise von 0,01 Teile bis 5 Teile, bevorzugt 0,1 bis 2 Teile eines Diamins als Regler auf. Auch Triamine finden Verwendung. Vorzugsweise weist die zweite Komponente des erfindungsgemäßen Pulvers ein Verhältnis von Aminoendgruppe zu Carboxylendgruppe von 2 : 1 oder größer, vorzugsweise von 5 : 1 bis 500 : 1 und besonders bevorzugt von 10 : 1 bis 50 : 1 auf. Es kann vorteilhaft sein, wenn in der zweiten Komponente ein Polyamid oder Copolyamid zur Herstellung des erfindungsgemäßen Pulvers eingesetzt wird, welches einen Gehalt an Carboxylendgruppen von kleiner 40 mmol/kg Polyamid oder Copolyamid, vorzugsweise kleiner 20 mmol/kg Polyamid oder Copolyamid und ganz bevorzugt kleiner 10 mmol/kg Polyamid oder Copolyamid aufweist.

Die Herstellung der geregelten Polyamide wird nachfolgend beschrieben. Die Grundzüge der Herstellung der geregelten Polyamidpulver sind bereits aus DE 44 21 454 und DE 197 08 946 bekannt. In diesen Schriften werden diese Polyamide als Einsatzgranulate für die Umfällung zu Wirbelsinterpulvern beschrieben.

Die Herstellung von Copolyamiden ist beispielsweise in DE 32 48 776 beschrieben und ist dem Fachmann bekannt. Die bei der Herstellung thermoplastischer statistischer Copolymer auftretenden Granulate werden anschließend bei tiefen Temperaturen vermahlen, beispielsweise bei -30 °C auf einer Prall- oder Stiftmühle unter Stickstoff, um pulverförmige Partikel zu erhalten. Zumindest eine Schutzsiebung zur Entfernung der sehr groben Partikel sollte anschließend durchgeführt werden. Meist ist eine anschließende Fraktionierung sinnvoll. Erfindungsgemäße Pulver liegen im Kornband 0 - 150 µm, bevorzugt 0 - 120 µm. Die Kornverteilung verbleibt dabei relativ breit. Typische Werte für das Verhältnis D90/D10 1 : 2 bis 1 : 15, bevorzugt 1 : 3 bis 1 : 5. Eine mechanische Nachbearbeitung, beispielsweise in einem schnelllaufenden Mischer, zur Verrundung der beim Mahlen entstandenen scharfkantigen Partikel und damit zur besseren Auftragbarkeit dünnerer Schichten , kann ebenfalls sinnvoll sein.

Als Regler für die erste Polyamid- oder Copolyamidkomponente eignen sich z. B. lineare, cyclische und verzweigte, organische Dicarbonsäuren mit 2 - 30 Kohlenstoffatomen. Als nicht limitierende Beispiele für Dicarbonsäuren seien Bernsteinsäure, Glutarsäure, Adipinsäure, 2,2,4-Trimethyladipinsäure, Korksäure, Azelainsäure, Sebazinsäure, Dodecandisäure, Brassylsäure, Tetradecandisäure, Pentadecandisäure, Octadecandisäure, Isophthalsäure und Terephthalsäure sowie Mischungen entsprechender Dicarbonsäuren genannt. Besonders geeignet sind Dicarbonsäuren, die Kohlenstoffketten mit einer Länge von 6 bis 30 Kohlenstoffatome aufweisen. Damit die Polyamide bzw. Copolyamide bei den beschriebenen RP/RM-Verfahren problemlos eingesetzt werden können, werden als Regler vorzugsweise keine flüchtigen Dicarbonsäuren, insbesondere keine Dicarbonsäuren mit einem Siedepunkt kleiner 150 °C, besonders bevorzugt kleiner 180 °C und ganz besonders bevorzugt kleiner 190 °C eingesetzt. Der Einsatz von flüchtigen Carbonsäuren kann bei den beschriebenen RP/RM-Verfahren insbesondere dann störend sein, wenn diese noch nicht in chemisch gebundener Form im Pulver vorliegen, da sie beim Bauprozess sich Verflüchtigen und durch Qualmen die Laseroptik - im Falle des Lasersinterns - beeinträchtigen und im schlimmsten Fall das Gerät beschädigen können.

Der Begriff der Dicarbonsäure soll dabei sowohl die funktionelle Gruppe der freien Carbonsäure als auch alle funktionellen Derivate der jeweiligen Carbonsäure umfassen, wie beispielsweise Säurehalogenide, Esterfunktionen, Amidfunktionen, Anhydride, Nitrile oder die entsprechenden Carboxylat-Salze, die unter den Bedingungen einer Polymerisation/Polykondensation jeweils in die freie Carbonsäure umgewandelt werden können.

Als Regler für die zweite Polyamid- oder Copolyamidkomponente eignen sich z. B. lineare, cyclische und verzweigte, organische Diamine mit 2 - 30 Kohlenstoffatomen. Als nicht limitierende Beispiele für Diamine seien 1,2-Diaminoethan, 1,3-Diaminopropan, 1,4-Diaminobutan, 1,5-Diaminopentan, 1,6-Diaminohexan, 1,12-Diaminododecan, 1,6-Diamino-2,2,4/2,4,4-trimethylhexan, und 1,3-Bis(aminoethyl)-benzol, Methylpentadiamin, 2-Methylpentamethylendiamin, 2,2,4-Trimethylhexamethylendiamin bzw. 2,4,4-Trimethylhexamethylendiamin, Decamethylendiamin, Dodecamethylendiamin, Isophorondiamin, C10-Diamin, Hexamethylendiamin, Piperazin, PACM, TMD sowie Mischungen entsprechender Diamine genannt. Besonders geeignet sind aliphatische, cycloaliphatische oder araliphatische Diamine mit 6 bis 30 Kohlenstoffatomen. Damit die Polyamide bzw. Copolyamide bei den beschriebenen RP/RM-Verfahren problemlos eingesetzt werden können, werden als Regler vorzugsweise keine flüchtigen Diamine, insbesondere keine Diamine mit einem Siedepunkt kleiner 150 °C, besonders bevorzugt kleiner 180 °C und ganz besonders bevorzugt kleiner 190 °C eingesetzt. Der Einsatz von flüchtigen Diaminen kann bei den beschriebenen RP/RM-Verfahren insbesondere dann störend sein, wenn diese noch in nicht chemisch gebundener Form im Pulver vorliegen, da sie beim Bauprozess sich Verflüchtigen und durch Qualmen die Laseroptik - im Falle des Lasersinterns - beeinträchtigen und im schlimmsten Fall das Gerät beschädigen können. Bei Fällpulvern wird man daher zweckmäßigerweise vor der Fällung eine Extraktion des Einsatzgranulats durchführen.

Der Begriff der Diamine soll dabei sowohl die funktionelle Gruppe der freien Amine als auch alle funktionellen Derivate des jeweiligen Amins umfassen, wie beispielsweise Isocyanate, die unter den Bedingungen einer Polymerisation/Polykondensation jeweils in das freie Amin umgewandelt werden können.

Der Regler wird vorteilhaft bereits bei der Polymerisation in das Polyamid bzw. Copolyamid eingebracht. Die Polymerisation kann dabei sowohl vom jeweiligen Lactam, z. B. Laurinlactam oder von der entsprechenden ω-Aminocarbonsäure, z. B. ω-Aminododecansäure ausgehen oder den entsprechenden Bausteinen für die Copolyamide ausgehen. Es kann vorteilhaft sein, einen Katalysator wie beispielsweise hypophosphorige Säure, dem Polyamid oder Copolyamid zuzugeben.

Es ist aber im Sinne der Erfindung auch möglich, den Regler in der Schmelze oder in fester Phase oder in Lösung mit einem hochmolekularen Polyamid oder Copolyamid umzusetzen, sofern unter den Reaktionsbedingungen die Aminoendgruppen im Fall der Herstellung der ersten Komponente bzw. die Carboxylendgruppen im Fall der Herstellung der zweiten Komponente in dem oben beschriebenen Umfang umgesetzt werden. Falls ein Polyamid verwendet wird, ist die Umsetzung des Polyamids mit dem Regler grundsätzlich auch während der Herstellung des Polyamides nach dem in DE 29 06 647 beschriebenen Fällprozess möglich. Bei diesem Fällprozess wird Polyamid 12 in einem Lösungsmittel, vorzugsweise Ethanol, gelöst und unter bestimmten Bedingungen aus dieser Lösung auskristallisiert. Die Zugabe des Reglers kann bei diesem Prozess z. B. in die Lösung des Polyamid 12 erfolgen. Ebenso kann es vorteilhaft sein, einen Katalysator wie beispielsweise hypophosphorige Säure, dem Polyamid oder Copolyamid an dieser Stelle zuzugeben.

Wird ein Polyamid auf der Basis von Diaminen und Dicarbonsäuren, sog. AABB-Polyamide, eingesetzt, erfolgt die Synthese in bekannter Weise ausgehend von Lösungen der entsprechenden Nylonsalze oder von Schmelzen der Diamine und Dicarbonsäuren in annähernd äquimolarem Verhältnis. Es kann vorteilhaft sein, wenn die schmelzflüssigen Dicarbonsäuren dabei gegen Verfärbung durch Zugabe von primären Aminen gemäß DE 43 171 89 stabilisiert sind.

Auch beim AABB-Typ wird erfindungsgemäß für die erste Komponente des erfindungsgemäßen Pulvers ein Polyamid mit einem Carboxylendgruppenüberschuss hergestellt, welches 0,01 Teile bis 5 Teile, bevorzugt 0,1 bis 2 Teile einer Dicarbonsäure als Regler aufweist. Vorzugsweise weist das geregelte Polyamid vom AABB-Typ ein Verhältnis von Carboxylendgruppe zu Aminoendgruppe von 2 : 1 oder größer, vorzugsweise von 5 : 1 bis 500 : 1 und besonders bevorzugt von 10 : 1 bis 50 : 1 auf. Auch in diesem Fall kann es vorteilhaft sein, wenn ein Polyamid des AABB-Typs zur Herstellung der ersten Komponente des erfindungsgemäßen Pulvers eingesetzt wird, welches einen Gehalt an Aminoendgruppen von kleiner 40 mmol/kg Polyamid, vorzugsweise kleiner 20 mmol/kg Polyamid und ganz bevorzugt kleiner 10 mmol/kg Polyamid aufweist. Zur Regelung können wiederum alle oben genannten Dicarbonsäuren verwendet werden, wobei beim AABB-Polyamid im einfachsten Fall ein Überschuss der dem Polyamid zugrunde liegenden Dicarbonsäure eingesetzt werden kann.

Für die zweite Komponente des erfindungsgemäßen Pulvers wird bei der Verwendung von AABB-Polyamiden ein Polyamid mit einem Aminoendgruppenüberschuss hergestellt, welches 0,01 Teile bis 5 Teile, bevorzugt 0,1 bis 2 Teile eines Diamins als Regler aufweist. Vorzugsweise weist das amingeregelte Polyamid vom AABB-Typ ein Verhältnis von Aminoendgruppe zu Carboxylendgruppe von 2 : 1 oder größer, vorzugsweise von 5 : 1 bis 500 : 1 und besonders bevorzugt von 10 : 1 bis 50 : 1 auf. Auch in diesem Fall kann es vorteilhaft sein, wenn ein Polyamid des AABB-Typs zur Herstellung der zweiten Komponente des erfindungsgemäßen Pulvers eingesetzt wird, welches einen Gehalt an Carboxylendgruppen von kleiner 40 mmol/kg Polyamid, vorzugsweise kleiner 20 mmol/kg Polyamid und ganz bevorzugt kleiner 10 mmol/kg Polyamid aufweist. Zur Regelung können wiederum alle oben genannten Amine verwendet werden, wobei beim AABB-Polyamid im einfachsten Fall ein Überschuss des dem Polyamid zugrundeliegenden Diamins eingesetzt werden kann.

Das erhaltene, geregelte Polyamid oder Copolyamid für die erste und die zweite Komponente wird granuliert und anschließend entweder vermahlen oder - im Falle eines Homopolyamids - vorteilhaft entsprechend DE 29 06 647, DE 19 708 946 oder DE 4 421 454 (Hüls AG) zu einem Fällpulver verarbeitet. Das erfindungsgemäße Pulver erhält man durch Mischung der beiden Komponenten im Dry Blend, beispielsweise durch Zugabe beider Komponenten in einen schnelllaufenden Mischer. Es kann von Vorteil sein, beiden Komponenten und/oder der Mischung Rieselhilfe nach dem Stand der Technik, beispielsweise pyrogenes Siliciumdioxid, beizugeben. Typische Mengen an Rieselhilfe bewegen sich zwischen 0,01 und 10 %, bezogen auf das in der Komposition enthaltene Polyamid oder Copolyamid.

Durch die Art der Herstellung weist das erfindungsgemäße Pulver Polyamid- oder Copolyamid-Partikel auf, die entweder säure- oder amingeregelt sind. Ein Viskositätsanstieg bzw. eine Nachkondensation innerhalb der einzelnen Partikel ist daher auch unter einer lang andauernden Temperaturbelastung, wie in den RP/RM-Anlagen gegeben, weitgehend unterbunden. In den aufgeschmolzenen Bereichen hingegen, die nach Abkühlen das Bauteil bilden, können beide Komponenten miteinander reagieren und den dort wegen der damit einzustellenden guten mechanischen Eigenschaften der Bauteile gewünschten Viskositätsanstieg bzw. die Nachkondensation ausbilden. Vorzugsweise werden die Mengenverhältnisse so eingestellt, dass in dem erfindungsgemäßen Pulver die Anzahl der Säureendgruppen in Summe in etwa der Anzahl der Aminoendgruppen in Summe entspricht. Das Verhältnis Säure- zu Aminoendgruppen oder Amino- zu Säureendgruppen in der erfindungsgemäßen Pulvermischung beträgt weniger als 3 : 1, bevorzugt weniger als 2 : 1, und besonders bevorzugt 1,5 : 1, und ganz besonders bevorzugt 1 : 1. Die Lösungsviskositäten der beiden Ausgangskomponenten weicht nach Möglichkeit nicht um mehr als 0,4 voneinander ab, bevorzugt um nicht mehr als 0,2 und ganz besonders bevorzugt um nicht mehr als 0,1.

Die gemäß dem erfindungsgemäßen Verfahren hergestellten, zur Verwendung in einem Verfahren zur Herstellung von Formkörpern in einem schichtweise arbeitenden Verfahren, bei welchem selektiv Bereiche der jeweiligen Schicht aufgeschmolzen werden, eingesetzten Neupulver auf Basis von Polyamid oder Copolyamid besitzen typischerweise eine Lösungsviskosität nach ISO 307, mit 1 % Phosphorsäure dotiertem m-Kresol als Lösemittel und 0,5 Gew.-% Polyamid bezogen auf das Lösemittel, von η_{rel.} = 1,4 bis 2,0, bevorzugt eine Lösungsviskosität von η_{rel.} = 1,5 bis 1,8. Beim erfindungsgemäßen Pulver, welches zumindest eine amingeregelte und eine säuregeregelte Komponente aufweist, verändert sich die Lösungsviskosität und der Amino- bzw. Säureendgruppengehalt des Rückpulvers gegenüber dem Neupulver kaum, so dass sich das Rückpulver nach Schutzsiebung erneut verarbeiten lässt. Die aufgeschmolzenen Bereiche, die das Bauteil formen, zeigen jedoch eine erhöhte Lösungsviskosität und daraus resultierend gegenüber einem nur aus einer geregelten Komponente bestehendem Material gute mechanische Eigenschaften, insbesondere eine verbesserte Reißdehnung.

Zur Herstellung des Pulvers kann es vorteilhaft sein, eine Mischung zu erzeugen, die neben entgegengesetzt difunktional geregeltem Polyamid- oder Copolyamid-Pulver als Neupulver auch geregeltes Polyamid- oder Copolyamid-Pulver als Rückpulver aufweist. Ebenso kann als Pulver eine Mischung erzeugt werden, die neben entgegengesetzt difunktional geregeltem Polyamid- oder Copolyamid-Pulver auch ungeregeltes Polyamid- oder Copolyamid-Pulver aufweist. Außerdem kann es vorteilhaft sein, wenn als Pulver eine Mischung hergestellt wird, die neben entgegengesetzt difunktional geregeltem Polyamid oder Copolyamid auch diverse Füllstoffe wie z. B. Glaspartikel, Keramikpartikel oder Metallpartikel aufweisen, oder weitere Additive wie beispielsweise Flammschutzmittel. Typische Füllstoffe sind z. B. Metallgrieße, beispielsweise Alugrieß, oder Stahl- oder Glaskugeln.

Die Füllstoffpartikel weisen dabei vorzugsweise eine kleinere oder ungefähr gleich große mittlere Partikelgröße wie die Partikel der Polyamide bzw. Copolyamide auf. Vorzugsweise sollte die mittlere Partikelgröße d₅₀ der Füllstoffe die mittlere Partikelgröße d₅₀ der Polyamide bzw. Copolyamide um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Bauhöhe bzw. Schichtdicke in einer wie für oben beschriebene Verfahren (RP/RM-Verfahren) geeignete RP/RM-Apparatur. Typischerweise werden Glaskugeln mit einem mittleren Durchmesser von 20 bis 80 µm verwendet. Ein weiterer Vorzugsbereich sind liegt bei durchschnittlichen Partikelgrößen für die Füllstoffe bzw. Additive unterhalb von 20 µm, bevorzugt unterhalb 15 µm.

Das erfindungsgemäße Pulver wird vorzugsweise in einem Verfahren zur Herstellung von Formkörpern in einem schichtweise arbeitenden Verfahren, bei welchem selektiv Bereiche der jeweiligen Schicht aufgeschmolzen werden, welches dadurch gekennzeichnet ist, dass ein Pulver, welches zumindest zwei entgegengesetzt difunktional geregelte Polyamid- oder Copolyamid-Komponenten aufweist, verwendet wird, eingesetzt.

Vorzugsweise weist das eingesetzte Pulver bei diesem Verfahren eine erste Komponente aus einem säuregeregelten Polyamid oder Copolyamid mit einem Verhältnis von Carboxylendgruppen zu Aminoendgruppen von größer 2:1, mit einem Aminoendgruppengehalt kleiner 40 mmol/kg und einer relativen Lösungsviskosität nach ISO 307 von 1,4 bis 2,0 auf sowie eine zweite Komponente aus einem amingeregelten Polyamid oder Copolyamid mit einem Verhältnis von Aminoendgruppen zu Carboxylendgruppen von größer 2 : 1, mit einem Carboxylendgruppengehalt kleiner 40 mmol/kg und einer relativen Lösungsviskosität nach ISO 307 von 1,4 bis 2,0.

Das Pulver kann Polyamid 11 und/oder Polyamid 12 aufweisen.

Es kann vorteilhaft sein, wenn bei diesem Verfahren ein Pulver eingesetzt wird, welches als erste Komponente ein mit Dicarbonsäuren oder Derivaten davon geregeltes Polyamid oder Copolyamid aufweist und als zweite Komponente ein mit Diaminen oder Derivaten davon geregeltes Polyamid oder Copolyamid. Die erste Komponente kann ein mit einer oder mehreren linearen, cyclischen oder verzweigten organischen Dicarbonsäuren oder Derivate davon mit 2 bis 30 Kohlenstoffatomen geregeltes Polyamid oder Copolyamid aufweisen. Die zweite Komponente kann ein mit einer oder mehreren linearen, cyclischen oder verzweigten organischen Diaminen oder Derivate davon mit 2 bis 30 Kohlenstoffatomen geregeltes Polyamid oder Copolyamid aufweisen.

Vorzugsweise wird bei dem erfindungsgemäßen Verfahren zur Herstellung von Formkörpern in einem schichtweise arbeitenden Verfahren, bei welchem selektiv Bereiche der jeweiligen Schicht aufgeschmolzen werden, ein Pulver eingesetzt, welches ein Polyamid- oder Copolyamid-Pulver mit einer relativen Lösungsviskosität nach ISO 307 von 1,5 - 1,8 aufweist.

Es hat sich als besonders vorteilhaft erwiesen, wenn bei dem erfindungsgemäßen Verfahren eine erste Komponente eingesetzt wird, welche die zur Regelung verwendete Dicarbonsäure mit einem Gehalt von 0,01 bis 5 Gew.-%, vorzugsweise 0,1 bis 2 Gew.-% bezogen auf das eingesetzte Polyamid oder Copolyamid aufweist und dessen Gehalt an Aminoendgruppen unter 20 mmol/kg, vorzugsweise kleiner 10 mmol/kg Polyamid oder Copolyamid beträgt sowie eine zweite Komponente, welche das zur Regelung verwendete Diamin mit einem Gehalt von 0,01 bis 5 Gew.-%, vorzugsweise 0,1 bis 2 Gew.-% bezogen auf das eingesetzte Polyamid oder Copolyamid aufweist und dessen Gehalt an Carboxylendgruppen unter 20 mmol/kg, vorzugsweise kleiner 10 mmol/kg Polyamid oder Copolyamid beträgt.
Das Verfahren kann so durchgeführt werden, dass ein Pulver eingesetzt wird, welches eine Mischung aus entgegengesetzt difunktional geregeltem und ungeregeltem Polyamid- oder Copolyamid-Pulver aufweist, bei welcher der Anteil an geregeltem Pulver von 0,1 bis 99,9 %, vorzugsweise von 5 bis 95 % besonders bevorzugt von 25 bis 75 % beträgt.

Das in dem erfindungsgemäßen Verfahren eingesetzte Pulver, welches entgegengesetzt difunktional geregeltes Polyamid oder Copolyamid aufweist, kann Neupulver, Rückpulver oder ein Gemisch aus Neupulver und Rückpulver sein. Es kann vorteilhaft sein, wenn das Verfahren so durchgeführt wird, das Rückpulver oder Mischungen von Rückpulver und Neupulver, deren Anteil an Neupulver kleiner 50 %, vorzugsweise kleiner 25 % und ganz besonders bevorzugt kleiner 10 % beträgt, aufweisende Pulver eingesetzt werden. Besonders bevorzugt wird Pulver eingesetzt, welches mindestens 40 Gew.-% Rückpulver aufweist.

Das eingesetzte Pulver kann außerdem Füllkörper, vorzugsweise anorganische Füllkörper aufweisen. Als solche anorganischen Füllkörper können z. B. Glaspartikel, Keramikpartikel oder Glaskugeln eingesetzt werden.

Durch das erfindungsgemäße Verfahren sowie durch die Verwendung und den Einsatz des erfindungsgemäßen Pulvers sind Formkörper, hergestellt durch ein Verfahren zur Herstellung von Formkörpern in einem schichtweise arbeitenden Verfahren, bei welchem selektiv Bereiche der jeweiligen Schicht aufgeschmolzen werden, die entgegengesetzt difunktional geregeltes Polyamid oder Copolyamid aufweisen, zugänglich. Insbesondere sind Formkörper, die ein entgegengesetzt difunktional geregeltes Polyamid 12 aufweisen, zugänglich. Des weiteren sind Formköper erhältlich, die eine Mischung aus entgegengesetzt difunktional geregeltem und ungeregeltem Polyamid oder Copolyamid aufweisen, wobei der Anteil an geregeltem Polyamid oder Copolyamid in der Polyamid- oder Copolyamid-Mischung 0,1 bis 100 % beträgt.

Die erfindungsgemäßen Formkörper können insbesondere auch dadurch hergestellt werden, dass ein erfindungsgemäßes Pulver als gealtertes Material (Alterung wie oben beschrieben) eingesetzt wird, wobei dieses einen Rekristallisationspeak und eine Kristallisationsenthalpie aufweist, die jeweils nicht kleiner sind als die des nicht gealterten Materials. Vorzugsweise wird ein erfindungsgemäßer Formkörper unter Verwendung eines gealterten Materials eingesetzt, welches einen höheren Rekristallisationspeak und eine höhere Kristallisationsenthalpie als das nicht gealterte Material aufweist. Die Formkörper weisen trotz der Verwendung von Altpulver nahezu die gleichen Eigenschaften auf wie aus Neupulver hergestellte Formkörper.

Formteile, die entgegengesetzt difunktional geregeltes Polyamid oder Copolyamid, insbesondere entgegengesetzt difunktional geregeltes Polyamid 12 aufweisen, sind wesentlich ökologischer und ökonomischer in ihrer Herstellung, da es möglich ist, das gesamte Rückpulver zur Herstellung von Formkörpern einzusetzen.

Anwendungsgebiete für diese Formkörper sind sowohl im Rapid Prototyping als auch im Rapid Manufacturing zu sehen. Mit Letzterem sind durchaus Kleinserien gemeint, also die Herstellung von mehr als einem gleichen Teil, bei dem aber die Produktion mittels eines Spritzgießwerkzeug nicht wirtschaftlich ist. Beispiele hierfür sind Teile für hochwertige PKW, die nur in kleinen Stückzahlen hergestellt werden, oder Ersatzteile für den Motorsport, bei denen neben den kleinen Stückzahlen auch der Zeitpunkt der Verfiigbarkeit eine Rolle spielt. Auch hochwertige Modeartikel wie beispielsweise Brillengestelle können ein Beispiel für eine Anwendung sein. Ebenso fällt darunter die Herstellung von gleichartigen, aber individuellen Bauteilen, die in größeren Stückzahlen gefertigt werden, wie beispielsweise Hörgeräte.

Beispiele für die Branchen, in die die erfmdungsgemäßen Teile gehen, können die Luft- und Raumfahrtindustrie sein, die Medizintechnik, der Maschinenbau, der Automobilbau, die Sportindustrie, die Haushaltswarenindustrie, Elektroindustrie und Lifestyle.

Folgende Beispiele zum Alterungsverhalten des Polyamid- oder Copolyamid-Pulvers sollen die Erfindung näher beschreiben, ohne sie auf die Beispiele einzuschränken.

### Beispiel 1: Umfällung von ungeregeltem Polyamid 12 (PA 12), gemäß DE-OS 19708946, nicht erfindungsgemäß

40 kg ungeregeltes PA12 (eta rel = 1,63, [COOH] = 71 mmol/kg; [NN₂]= 63 mmol/kg) werden mit 0,2 kg IRGANOX 1098® (= N,N'-Hexamethylen-bis-(3,5-di-tert.-butyl-4-hydroxyhydrozimtsäureamid) mit 350 1 Ethanol, vergällt mit 2-Butanon und 1 % Wassergehalt, innerhalb von 5 Stunden in einem 0,8 m3-Rührkessel (D = 90cm, h = 170cm) auf 145 °C gebracht und unter Rühren (Blattrührer, d = 42cm, Drehzahl = 120 Upm) 1 Stunde bei dieser Temperatur belassen. Anschließend wird die Manteltemperatur auf 120 °C reduziert und mit einer Kühlrate von 45 K/h bei der derselben Rührerdrehzahl die Innentemperatur auf 125 °C gebracht. Von jetzt an wird bei gleicher Kühlrate die Manteltemperatur 2K - 3K unter der Innentemperatur gehalten. Die Innentemperatur wird mit gleicher Kühlrate auf 117°C gebracht und dann 60 Minuten konstant gehalten. Danach wird mit einer Kühlrate von 40 K/h die Innentemperatur auf 110 °C gebracht. Bei dieser Temperatur setzt die Fällung, erkennbar an der Wärmeentwicklung, ein. Nach 20 Minuten fällt die Innentemperatur mit dem Ende der Fällung ab. Nach Abkühlen der Suspension auf 75°C wird die Suspension in einen Schaufeltrockner überführt. Das Ethanol wird daraus bei laufendem Rührwerk bei 70°C/400mbar abdestilliert, und der Rückstand anschließend bei 20mbar/ 85°C 3 Stunden nachgetrocknet.

| | |
|---|---|
| Siebanalyse: | < 32µm: 4 Gew.-% |
| | < 40µm: 19 Gew.-% |
| | < 50µm: 44 Gew.-% |
| | < 63µm: 83 Gew.-% |
| | < 80µm: 91 Gew.% |
| | < 100µm: 100Gew.-% |
| BET: | 6,1 m²/g |
| Schüttdichte: | 442g/l |

### Beispiel 2: Umfällung von dicarbonsäuregeregeltem PA 12 (Komponente I)

Der Versuch aus Beispiel 1 wurde mit einem PA 12-Granulat wiederholt, das durch hydrolytische LL-Polymerisation in Gegenwart von 1 Teil Dodecandisäure pro 100 Teile Laurinlactam erhalten worden ist: η_{rel.} = 1,61, [COOH] = 122 mmol/kg, [NHz] = 5 mmol/kg. Mit Ausnahme der Rührerdrehzahl (150Upm) entsprechen die Löse-, Fäll- und Trocknungsbedingungen den in Beispiel 1 gewählten. Das Produkt wies eine Schüttdichte von 425 g/l und eine BET von 6,6m²/g auf.

Eine Siebanalyse ergab die folgenden Werte:
< 32µm: 8 Gew.-%
< 40µm: 27 Gew.-%
< 50µm: 61 Gew.-%
< 63µm: 97 Gew.-%
< 90µm: 100Gew.-%

### Beispiel 3: Umfällung von diamingeregeltem PA 12 (Komponente II)

Der Versuch aus Beispiel 1 wurde mit einem PA 12-Granulat wiederholt, das durch hydrolytische LL-Polymerisation in Gegenwart von 0,8 Teilen PACM-50 pro 100 Teile Laurinlactam erhalten worden ist: η_{rel.} = 1,76, [COOH] = 24 mmol/kg, [NH₂] = 81 mmol/kg. Mit Ausnahme der Rührerdrehzahl (150Upm) entsprechen die Löse-, Fäll- und Trocknungsbedingungen den in Beispiel 1 gewählten. Das Produkt wies eine Schüttdichte von 405 g/l und eine BET von 7,1 m²/g auf.

Eine Siebanalyse ergab die folgenden Werte:
< 32µm: 2 Gew.-%
< 40µm: 17 Gew.-%
< 50µm: 41 Gew.-%
< 63µm: 50 Gew.-%
< 90µm: 90Gew.-%
< 100µm: 100Gew.-%

### Beispiel 4: (erfindungsgemäß)

Das säuregeregelte Polyamid-Pulver aus Beispiel 2 wurde mit dem amingeregelten Polyamid-Pulver aus Beispiel 3 im Verhältnis 40 : 60 gemischt. Die Mischung wurde auf einem MTI-Mischer M20 bei 400 UPM in 3 Minuten Mischzeit hergestellt. Die Mischung hat einen η_{rel.} = 1.61.

### Beispiel 5: (erfindungsgemäß)

Das säuregeregelte Polyamid-Pulver aus Beispiel 2 und das amingeregelte Polyamid-Pulver aus Beispiel 3 wurde mit Glaskugeln (40 - 80µm) als Füllstoff im Verhältnis 6:9:10 versetzt und vermischt. Dazu wurden die beiden Pulverkomponenten und die Glaskugeln in einem Schritt in den MTI-Mischer gegeben und ebenfalls bei 400 UPM in 5 Minuten Mischzeit hergestellt.

### Beispiel 6: (erfindungsgemäß)

Für die Komponente I wurde ein Pulver aus einem statistischem Copolyamid aus 60 Teilen Laurinlactam, 25 Teilen Caprolactam, sowie 8,2 Teilen Adipinsäure und 6,8 Teilen Hexamethylendiamin, das durch hydrolytische Polykondensation erhalten worden war, per Kaltvermahlung und anschließender Fraktionierung hergestellt. Der Adipinsäureüberschuss wird so gewählt, dass das Pulver einen Überschuss an Carboxylendgruppen aufweist. Per Titration wurden 170 mVal/g Carboxylgruppen und 20 mVal Aminoendgruppen ermittelt. Die Lösungsviskosität beträgt 1,41.

Für die Komponente II wurde ein Pulver aus einem statistischem Copolyamid aus 60 Teilen Laurinlactam, 25 Teilen Caprolactam, sowie 7,4 Teilen Adipinsäure und 7,7 Teilen Hexamethylendiamin, das durch hydrolytische Polykondensation erhalten worden war, per Kaltvermahlung und anschließender Fraktionierung hergestellt. Der Hexamethylendiaminüberschuss wird so gewählt, dass das Pulver einen Überschuss an Aminoendgruppen aufweist. Per Titration wurden 5 mVal/g Carboxylgruppen und 165 mVal Aminoendgruppen ermittelt. Die Lösungsviskosität beträgt 1,43.

Die Komponenten I und II wurden in einem Henschelmischer (1500 UPM, 2 min) im Verhältnis 1:1 gemischt; anschließend wurde die Mischung ebenfalls im Henschelmischer (500 UPM, 1 min) mit 0,1 Teilen Aerosil 200 versehen. Die Lösungsviskosität beträgt 1,43. Der MFR-Wert wurde mit 20 g/10min ermittelt, bei 160 °C/2,16 kg. Die Schüttdichte beträgt 462 g/l. Die Kornverteilung wurde wie folgt ermittelt: d10 = 18 µm, d50 = 75 µm, d90 = 112 µm. Per Titration wurden 88 mVal/g Carboxylgruppen und 92 mVal Aminoendgruppen ermittelt.

### Beispiel 7:

Die thermischen Effekte beim Laser-Sintern oder einem der oben beschriebenen RP/RM-Verfahren wurden durch Temperversuche in einem Trockenschrank bei 160 °C im Zeitraffer simuliert. Es wurden die Pulver aus den Beispielen 1 bis 5 eingesetzt. Für Beispiel 6 wurde eine Temperatur im Trockenschrank von 110 °C eingestellt. Die ηᵣₑₗ-Werte zur Nachkondensation in Abhängigkeit von der Dauer der Temperversuche sind in Tabelle 1 zusammengefasst:

**Tabelle 1: Temperversuche bei 160 °C im Trockenschrank (Beispiel 6)**

| **Beispiel** | ηᵣₑₗ Startpunkt | ηᵣₑₗ **nach 1h** | ηᵣₑₗ **nach 4 h** | **η**ᵣₑₗ **nach 8 h** |
|---|---|---|---|---|
| 1 (ungeregeltes PA12) | 1,60 | 1,82 | 2,20 | 2,30 |
| 2 (säuregeregeltes PA12) | 1,55 | 1,55 | 1,58 | 1,62 |
| 3 (amingeregeltes PA12) | 1,66 | 1,72 | vergelt | Vergelt |
| Mischung PA12 40:60 | 1,63 | 1,68 | vergelt | vergelt |
| Mischung Copolyamid 50:50 | 1,43 | 1,44 | 1,44 | 1,44 |

Anhand der Beispiele kann sehr gut erkannt werden, dass die erfindungsgemäßen Komponenten I und II gemäß der Beispiele 2 und 3, die beide geregeltes Polyamid oder Copolyamid aufweisen, einen deutlich geringeren Anstieg der Lösungsviskosität aufweisen. Innerhalb eines einzelnen Pulverkoms ist die Nachkondensation des Polyamids oder Copolyamids weitgehend unterbunden.

Die erfindungsgemäßen Pulver 4,5, und 6 weisen auch nach einer Versuchszeit von 8 Stunden eine Lösungsviskosität von kleiner 2 auf, und wären damit als Rückpulver wieder zum Laser-Sintern einsetzbar.

### Beispiel 8

Das nachfolgende Beispiel 8 zeigt die Veränderung der Lösungsviskosität von geregeltem und nicht geregeltem Polyamid 12-Pulver in Abhängigkeit von der Bauzeit bei der Durchführung des Laser-Sinterns. Beispiel 9 zeigt die Veränderung der Lösungsviskosität bei einem erfindungsgemäßen Pulver aus Beispiel 4.

**Tabelle 2: Lösungsviskositäten**

| **Beispiel** | ηᵣₑₗ Startpunkt (Pulver) | ηᵣₑₗ **am** Bauteil | **η**ᵣₑₗ **nach 8h** Nachkondensation am Pulver (Beispiel 7) |
|---|---|---|---|
| 1 (ungeregeltes PA12) | 1,60 | 2,1 | 2,3 |
| 2 (säuregeregeltes PA12) | 1,55 | 1,55 | 1,62 |
| 3 (amingeregeltes PA12) | 1,66 | vergelt | Vergelt |
| Mischung PA12 40:60 | 1,61 | 1,9 | Vergelt |
| Mischung Copolyamid 50:50 | 1,43 | 1,59 | 1,44 |

Es wird deutlich, dass - soweit messbar - eine Nachkondensation am Bauteil stattfinden konnte, im nicht verbauten Pulver jedoch nicht. Dies steht daher ohne Eigenschaftseinbußen für den nächsten Bauprozess zur Verfügung.

### Beispiel 9: (Temperversuch)

Ein Pulver wurde gemäß den Beispielen 1, 3, 4 und 6 hergestellt und in einem Vakuumtrockenschrank VT 5102 der Firma Heräus für 5 Tage bei 150 °C getempert, um die in der RP/RM-Maschine stattfindende Temperaturbelastung zu simulieren. Anschließend wurde das so künstlich gealterte Pulver mit 40, 25 und 10 Teilen an unbehandeltem Pulver vermischt (Auffrischung) und in einer Laser-Sinter-Anlage (EOSINT P 360, Firma EOS GmbH, Krailling) verbaut. Folgende Ergebnisse wurden dabei erzielt:

**Tabelle 3: Ergebnisse Temperversuch**

| **Verwendung von Pulver aus Beispiel ...** | **Dichte der Bauteile [g/l]** | **E-Modul [N/mm²]** | **Reißdehnung [%]** | **Optische Beurteilung** |
|---|---|---|---|---|
| 1 mit 40 Teilen Auffrischung | 0,93 | 1590 | 20 | Oberfläche rau, deutliche Einfallstellen |
| 1 mit 25 Teilen Auffrischung | 0,9 | 1108 | 14,1 | Oberfläche sehr rau, tiefe Einfallstellen |
| 1 mit 10 Teilen Auffrischung | 0,8 | 990 | 8,4 | Oberfläche sehr rau, tiefe Einfallstellen |
| 3 mit 40 Teilen Auffrischung | 0,98 | 1801 | 21,1 | Teile sind gelblich, rau und gebogen |
| 3 mit 25 Teilen Auffrischung | 0,97 | 1780 | 21,5 | Teile sind gelblich, rau und gebogen |
| 3 mit 10 Teilen Auffrischung | 0,95 | 1407 | 16,1 | Teile sind gelblich, rau und gebogen |
| 4 mit 40 Teilen Auffrischung | 0,93 | 1601 | 18,6 | Oberfläche ok |
| 4 mit 25 Teilen Auffrischung | 0,92 | 1644 | 17,9 | Oberfläche ok |
| 4 mit 10 Teilen Auffrischung | 0,85 | 1375 | 15,11 | Oberfläche akzeptabel, je nach Verarbeitungsparameter aber auch rau, leichte Einfallstellen |
| 6 mit 40 Teilen Auffrischung | | 800 | 20,2 | Oberfläche akzeptabel |
| 6 mit 25 Teilen Auffrischung | | 756 | 18,0 | Oberfläche akzeptabel |
| 6 mit 10 Teilen Auffrischung | | 630 | 16,9 | Oberfläche akzeptabel, rauer als mit mehr Neupulver |

Der Vorteil der erfindungsgemäßen Pulver der Beispiele 4 bis 6 ist deutlich festzustellen: die Oberflächenqualität der damit hergestellten Bauteile liegt deutlich über der aus den mit nicht erfindungsgemäßen Pulvern der Beispiel 1 und 3 gebauten. Für die mechanischen Werte gilt gleiches. Der Unterschied wird größer, je mehr Temperpulver verwendet wird. Gerade bei Auffrischraten von 10 bis 25 %, die im Markt gewünscht werden, sind die erfindungsgemäßen Pulver besonders gut geeignet, aber auch Auffrischraten von 5 % führen zu akzeptablen Ergebnissen.

### Beispiel 10: Kreislaufversuch)

Pulver aus Beispiel 4 wurde in einer Laser-Sinter-Anlage (EOSINT P 380, Firma EOS GmbH, Krailling) verbaut, und zwar in 9 Durchläufen, wobei das wiederverwendete Pulver außer beim ersten Durchlauf, der zu 100 Teilen mit Neupulver gestartet wurde, jeweils mit 10 Teilen neuem Pulver aufgefrischt wurde. Je Durchlauf wurden ca. 2000 Schichten zu je 0,15 mm Höhe gebaut. Die Verarbeitungstemperatur wurde jeweils angepasst; sie liegt bei der Verwendung von Pulver aus dem vorhergehenden Durchlauf, auch mit Abmischung von Neupulver, höher als bei der Verwendung von ausschließlich Neupulver. Die Bauteile wurden mit unterschiedlichen Verarbeitungsparametern gebaut. Tendenzmäßig sehen die Teile mit schneller Belichtung, aber hoher Laserleistung besser aus als Teile, die mit langsamer Geschwindigkeit, aber niedrigerer Laserleistung hergestellt wurden. Das gilt besonders ab dem 8. Durchlauf. Details zu den Verarbeitungsparametern sind den Empfehlungen der Maschinenhersteller zu entnehmen.

Folgende Ergebnisse wurden dabei erzielt:

**Tabelle 4: Kreislaufversuch**

| **Pulver aus Beispiel 4** | **Dichte der Bauteile [g/l]** | **E-Modul [N/mm²]** | **Reißdehnung [%]** | **Optische Beurteilung** | **Lösungsviskosität am Pulver** |
|---|---|---|---|---|---|
| 1. Durchlauf | 0,9 | 1690 | 14,2 | Sehr gute Oberfläche | 1,61 |
| 2. Durchlauf | 0,92 | 1657 | 18,9 | Sehr gute Oberfläche | Vergelt |
| 3. Durchlauf | 0,94 | 1821 | 41,2 | Sehr gute Oberfläche | Vergelt |
| 4. Durchlauf | 0,92 | 1808 | 16,49 | Sehr gute Oberfläche | Vergelt |
| 5. Durchlauf | 0,91 | 1745 | 24,6 | Sehr gute Oberfläche | |
| 6. Durchlauf | 0,91 | 1624 | 21,4 | Sehr gute Oberfläche | |
| 7. Durchlauf | 0,91 | 1661 | 18,5 | Sehr gute Oberfläche | |
| 8. Durchlauf | 0,91 | 1638 | 38,9 | Sehr gute Oberfläche je nach Verarbeitungsparametern | |
| 9. Durchlauf | 0,89 | 1624 | 15,7 | Sehr gute Oberfläche | Vergelt |

Auch nach 9 Durchläufen konnten Teile mit guten mechanischen Eigenschaften und guten Oberflächen gebaut werden. Trotz Vergelung kann die erfindungsgemäße Pulvermischung weiter eingesetzt werden ohne dass die Bauteile die guten mechanischen Eigenschaften verlieren.

### Beispiel 11: Alterungsversuche

Für eine künstliche Wärmealterung wurde das Pulver aus Beispiel 1 und Beispiel 4 im Vakuumtrockenschrank für 7 Tage bei 135 °C künstlich gealtert.

Es wurden sowohl an erfindungsgemäß hergestelltem Pulver als auch an den künstlich gealterten Proben DSC-Untersuchungen nach DIN 53765 mit einem DSC-Gerät (Perkin Elmer DSC 7) durchgeführt. Die Ergebnisse dieser Untersuchungen sind in Tabelle 5 zusammengefasst.

**Tabelle 5: Ergebnisse der Alterungsversuche**

| | **Schmelzepeak** | **Schmelzeenthalpie** | **Rekristallisationspeak** | **Kristallisationsenthalpie** |
|---|---|---|---|---|
| | °C | J/g | °C | J/g |
| **Pulver aus Beispiel 4 neu** | 186,3 | 113 | 138,4 | 61,8 |
| **Pulver aus Beispiel 4 nach Wärmealterung** | 186,5 | 112,6 | 139,5 | 62,72 |
| **Pulver aus Beispiel 1 neu** | 188,4 | 124,2 | 138,4 | 64,9 |
| **Pulver aus Beispiel 1 nach Wärmealterung** | 192,2 | 124,9 | 133,1 | 59,0 |

Wie anhand der Ergebnisse in Tabelle 5 klar zu erkennen ist, weist das erfindungsgemäße Pulver gemäß Beispiel 4 nach dem Alterungsprozess eine Rekristallisationstemperatur (Rekristallisationspeak) auf, die sogar höher ist als die Rekristallisationstemperatur des Neumaterials. Das bekannte ungeregelte Vergleichspulver gemäß Beispiel 1 zeigt hingegen eine deutliche Abnahme der Rekristallisationstemperatur nach Durchlaufen des Alterungsprozesses.

## Patentansprüche

1. Schichtweise arbeitendes Verfahren, bei welchem selektiv Bereiche der jeweiligen pulverförmigen Schicht aufgeschmolzen und nach Abkühlen verfestigt werden,
**dadurch gekennzeichnet,**
**dass** eine wiederverwendbare Mischung von disäure- und diamingeregeltem Polyamid und /oder Copolyamid verwendet wird, welche ein Verhältnis von Carboxylendgruppe zu Aminoendgruppe oder von Aminoendgruppe zu Carboxylendgruppe kleiner 5:1 aufweist.

2. Verfahren nach Anspruch 1,
**dadurch gekennzeichnet,**
**dass** eine Mischung von disäure- und diamingeregeltem Polyamid und /oder Copolyamid verwendet wird, deren mittlerer Korndurchmesser zwischen 30 und 100 µm liegt.

3. Verfahren nach Anspruch 1,
**dadurch gekennzeichnet,**
**dass** eine Mischung von disäure- und diamingeregeltem Polyamid und /oder Copolyamid verwendet wird, deren mittlerer Korndurchmesser zwischen 40 und 80 µm liegt.

4. Verfahren nach zumindest einem der Ansprüche 1 bis 3,
**dadurch gekennzeichnet,**
**dass** eine Mischung von disäure- und diamingeregeltem Polyamid und /oder Copolyamid verwendet wird, welche ein Verhältnis von Carboxylendgruppe zu Aminoendgruppe oder von Aminoendgruppe zu Carboxylendgruppe kleiner 3:1 aufweist.

5. Verfahren nach zumindest einem der Ansprüche 1 bis 3,
**dadurch gekennzeichnet,**
**dass** eine Mischung von disäure- und diamingeregeltem Polyamid und /oder Copolyamid verwendet wird, welche ein Verhältnis von Carboxylendgruppe zu Aminoendgruppe oder von Aminoendgruppe zu Carboxylendgruppe kleiner 1,5 : 1 aufweist.

6. Verfahren nach zumindest einem der Ansprüche 1 bis 3,
**dadurch gekennzeichnet,**
**dass** eine Mischung von disäure- und diamingeregeltem Polyamid und /oder Copolyamid verwendet, welche ein Verhältnis von Carboxylendgruppe zu Aminoendgruppe oder von Aminoendgruppe zu Carboxylendgruppe kleiner 1,2 : 1 aufweist.

7. Verfahren nach zumindest einem der vorhergehenden Ansprüche,
**dadurch gekennzeichnet,**
**dass** das verwendete Pulver eine BET-Oberfläche kleiner als 15 m²/g aufweist.

8. Verfahren nach zumindest einem der vorhergehenden Ansprüche,
**dadurch gekennzeichnet,**
**dass** das verwendete Pulver eine BET-Oberfläche kleiner als 10 m²/g aufweist.

9. Verfahren nach zumindest einem der vorhergehenden Ansprüche,
**dadurch gekennzeichnet,**
**dass** das verwendete Pulver ein geregeltes Polyamid 12 aufweist.

10. Verfahren nach zumindest einem der vorhergehenden Ansprüche,
**dadurch gekennzeichnet,**
**dass** das verwendete Pulver ein geregeltes Polyamid 11 aufweist.

11. Verfahren nach zumindest einem der vorhergehenden Ansprüche,
**dadurch gekennzeichnet,**
**dass** das verwendete Pulver ein geregeltes Copolyamid aufweist.

12. Verfahren nach zumindest einem der vorhergehenden Ansprüche,
**dadurch gekennzeichnet,**
**dass** das verwendete Pulver eine Mischung aus disäure- und diamingeregeltem und ungeregeltem Polyamid oder Copolyamid aufweist.

13. Verfahren nach zumindest einem der vorhergehenden Ansprüche,
**dadurch gekennzeichnet,**
**dass** das verwendete Pulver eine Mischung aus disäure- und diamingeregeltem und ungeregeltem Polyamid oder Copolyamid aufweist, wobei der Anteil an geregeltem Polyamid oder Copolyamid in der Mischung von 0,1 bis 99,9 % beträgt.

14. Verfahren nach zumindest einem der vorhergehenden Ansprüche,
**dadurch gekennzeichnet,**
**dass** das verwendete Pulver zumindest einen weiteren Füllstoff oder Additiv aufweist.

15. Verfahren nach zumindest einem der vorhergehenden Ansprüche,
**dadurch gekennzeichnet,**
**dass** das verwendete Pulver als Füllstoff Glaspartikel aufweist.

16. Verfahren nach zumindest einem der vorhergehenden Ansprüche,
**dadurch gekennzeichnet,**
**dass** das verwendete Pulver als Füllstoff Alugrieß aufweist.

17. Verfahren nach zumindest einem der vorhergehenden Ansprüche,
**dadurch gekennzeichnet,**
**dass** das verwendete Pulver als Additiv Flammschutzmittel aufweist.

18. Verfahren nach zumindest einem der vorhergehenden Ansprüche,
**dadurch gekennzeichnet,**
**dass** das verwendete Pulver zumindest eine Rieselhilfe aufweist.

19. Verfahren nach zumindest einem der vorhergehenden Ansprüche,
**dadurch gekennzeichnet,**
**dass** das verwendete Pulver von 5 bis 100 % Rückpulver, also nicht aufgeschmolzenes Pulver aus einem vorangegangenen RP/RM-Prozess, aufweist.

20. Verfahren nach zumindest einem der vorhergehenden Ansprüche,
**dadurch gekennzeichnet,**
**dass** nach Wärmealterung des verwendeten Pulvers der Rekristallisationspeak und/oder die Kristallisationsenthalpie, gemessen nach ISO 11357 mit 20 K/min Abkühlrate, des Pulvers sich nicht zu kleineren Werten verschiebt.

21. Verfahren nach zumindest einem der vorhergehenden Ansprüche,
**dadurch gekennzeichnet,**
**dass** nach Wärmealterung des verwendeten Pulvers der Rekristallisationspeak und/oder die Kristallisationsenthalpie, gemessen nach ISO 11357 mit 20 K/min Abkühlrate, sich zu größeren Werten verschiebt.

22. Verfahren nach zumindest einem der vorhergehenden Ansprüche,
**dadurch gekennzeichnet,**
**dass** das verwendete Pulver eine Lösungsviskosität nach ISO 307 in 0,5%igem m-Kresol zwischen 1,4 und 2 aufweist.

23. Verfahren nach zumindest einem der vorhergehenden Ansprüche,
**dadurch gekennzeichnet,**
**dass** das verwendete Pulver eine Lösungsviskosität nach ISO 307 in 0,5%igem m-Kresol zwischen 1,5 und 1,8 aufweist.

24. Formkörper, hergestellt in einem schichtweise arbeitenden Verfahren nach einem der vorhergehenden Ansprüche, bei welchem selektiv Bereiche der jeweiligen pulverförmigen Schicht aufgeschmolzen und nach Abkühlen verfestigt werden,
**dadurch gekennzeichnet,**
**dass** der Formkörper eine Mischung von disäure- und diamingeregeltem Polyamid oder Copolyamid aufweist.

25. Formkörper nach zumindest einem der vorhergehenden Ansprüche,
**dadurch gekennzeichnet,**
**dass** der Formkörper eine Mischung von disäure- und diamingeregeltem Polyamid 12 aufweist.

26. Formkörper nach zumindest einem der vorhergehenden Ansprüche,
**dadurch gekennzeichnet,**
**dass** der Formköper eine Mischung aus disäure- und diamingeregeltem und ungeregeltem Polyamid oder Copolyamid aufweist und dass das der Anteil an geregeltem Polyamid in der Polyamid-Mischung 0,1 bis 100 % beträgt.

27. Formkörper nach zumindest einem der vorhergehenden Ansprüche,
**dadurch gekennzeichnet,**
**dass** der Formkörper unter Verwendung von gealtertem Material hergestellt wird, welches einen Rekristallisationspeak und eine Kristallisationsenthalpie aufweist, die jeweils nicht kleiner sind als die des nicht gealterten Materials.

28. Formkörper nach zumindest einem der vorhergehenden Ansprüche,
**dadurch gekennzeichnet,**
**dass** der Formkörper unter Verwendung von gealtertem Material hergestellt wird, welches einen höheren Rekristallisationspeak und eine höhere Kristallisationsenthalpie als das nicht gealterte Material aufweist.

29. Formkörper nach zumindest einem der vorhergehenden Ansprüche,
**dadurch gekennzeichnet,**
**dass** der Formkörper Verwendung findet in der Luft- und Raumfahrttechnik, dem Maschinenbau, der Medizintechnik, dem Automobilbau, der Sportindustrie oder der Elektroindustrie.

30. Verfahren zur Herstellung von Pulver, welches eine Mischung von disäure- und diamingeregeltem Polyamid und/oder Copolyamid aufweist,
**dadurch gekennzeichnet,**
**dass** als Basismaterial eine Mischung aus zum einen ein disäuregeregeltes Polyamid- oder Copolyamid-Pulver verwendet wird, welches durch eine Behandlung eines ungeregelten Polyamids oder Copolyamids mit einer Dicarbonsäure als Regler erhalten wird, zum anderen ein diamingeregeltes Polyamid- oder Copolyamid-Pulver verwendet wird, welches durch eine Behandlung eines ungeregelten Polyamids oder Copolyamids mit einem Diamin als Regler erhalten wird, verwendet wird.

31. Verfahren nach Anspruch 30,
**dadurch gekennzeichnet,**
**dass** die Behandlung durch Umsetzen des ungeregelten Polyamids oder des Copolyamids während der Polymerisation erfolgt.

32. Verfahren nach Anspruch 30,
**dadurch gekennzeichnet,**
**dass** die Behandlung des ungeregelten Polyamids oder des Copolyamids durch Umsetzen eines hochmolekularen Polyamids oder Copolyamids mit einem Regler in der Schmelze, in fester Phase oder in Lösung erfolgt.

## Claims

1. Layer-by-layer process in which regions of the respective pulverulent layer are selectively melted and, after cooling, are fixed,
**characterized in that**
a reusable mixture of diacid- and diamine-regulated polyamide and/or copolyamide is used, the mixture having a ratio of carboxy end group to amino end group, or of amino end groups to carboxy end group, which is smaller than 5:1.

2. Process according to Claim 1,
**characterized in that**
a mixture of diacid- and diamine-regulated polyamide and/or copolyamide is used, whose median grain diameter is from 30 to 100 µm.

3. Process according to Claim 1,
**characterized in that**
comprises a mixture of diacid- and diamine-regulated polyamide and/or copolyamide is used, whose median grain diameter is from 40 to 80 µm.

4. Process according to at least one of Claims 1 to 3,
**characterized in that**
a mixture of diacid- and diamine-regulated polyamide and/or copolyamide is used, the mixture having a ratio of carboxy end group to amino end group, or of amino end group to carboxy end group, which is smaller than 3:1.

5. Process according to at least one of Claims 1 to 3,
**characterized in that**
a mixture of diacid- and diamine-regulated polyamide and/or copolyamide is used, the mixture having a ratio of carboxy end group to amino end group, or of amino end group to carboxy end group, which is smaller than 1.5:1.

6. Process according to at least one of Claims 1 to 3,
**characterized in that**
a mixture of diacid- and diamine-regulated polyamide and/or copolyamide is used, the mixture having a ratio of carboxy end group to amino end group, or of amino end group to carboxy end group, which is smaller than 1.2:1.

7. Process according to at least one of the preceding claims,
**characterized in that**
the BET surface area of the powder used is smaller than 15 m²/g.

8. Process according to at least one of the preceding claims,
**characterized in that**
the BET surface area of the powder used is smaller than 10 m²/g.

9. Process according to at least one of the preceding claims,
**characterized in that**
the powder used comprises a regulated nylon-12.

10. Process according to at least one of the preceding claims,
**characterized in that**
the powder used comprises a regulated nylon-11.

11. Process according to at least one of the preceding claims,
**characterized in that**
the powder used comprises a regulated copolyamide.

12. Process according to at least one of the preceding claims,
**characterized in that**
the powder used comprises a mixture composed of diacid- and diamine-regulated and of unregulated polyamide or copolyamide.

13. Process according to at least one of the preceding claims,
**characterized in that**
the powder used comprises a mixture composed of diacid- and diamine-regulated and of unregulated polyamide or copolyamide, the proportion of regulated polyamide or copolyamide in the mixture being from 0.1 to 99.9%.

14. Process according to at least one of the preceding claims,
**characterized in that**
the powder used comprises at least one other filler or additive.

15. Process according to at least one of the preceding claims,
**characterized in that**
the powder used comprises glass particles as filler.

16. Process according to at least one of the preceding claims,
**characterized in that**
the powder used comprises granular aluminum as filler.

17. Process according to at least one of the preceding claims,
**characterized in that**
the powder used comprises flame retardant as additive.

18. Process according to at least one of the preceding claims,
**characterized in that**
the powder used comprises at least one powder-flow aid.

19. Process according to at least one of the preceding claims,
**characterized in that**
the powder used comprises from 5 to 100% of recycling powder, i.e. unmelted powder from a previous RP/RM process.

20. Process according to at least one of the preceding claims,
**characterized in that**
after heat-aging of the powder used, the recrystallization peak and/or the enthalpy of crystallization, measured to ISO 11357 with 20 k/min cooling rates of the powder does not shift to smaller values.

21. Process according to at least one of the preceding claims,
**characterized in that**
after heat-aging of the powder used, the recrystallization peak and/or the enthalpy of crystallization, measured to ISO 11357 with 20 k/min cooling rates of the powder shifts to greater values.

22. Process according to at least one of the preceding claims,
**characterized in that**
the solution viscosity of the powder used is from 1.4 to 2 to ISO 307 at 0.5% strength in m-cresol.

23. Process according to at least one of the preceding claims,
**characterized in that**
the solution viscosity of the powder used is from 1.5 to 1.8 to ISO 307 at 0.5% strength in m-cresol.

24. Molding produced in a layer-by-layer process according to one of the preceding claims in which regions of the respective pulverulent layer are selectively melted and, after cooling, are fixed,
**characterized in that**
the molding comprises a mixture of diacid- and
diamine-regulated polyamide or copolyamide.

25. Molding according to at least one of the preceding claims,
**characterized in that**
the molding comprises a mixture of diacid- and diamine-regulated nylon-12.

26. Molding according to at least one of the preceding claims,
**characterized in that**
the molding comprises a mixture composed of diacidand diamine-regulated and of unregulated polyamide or copolyamide, and **in that** the proportion of regulated polyamide in the polyamide mixtures is from 0.1 to 100%.

27. Molding according to at least one of the preceding claims,
**characterized in that**
the molding is produced using aged material of which neither the recrystallization peak nor the enthalpy of crystallization is smaller than those of the unaged material.

28. Molding according to at least one of the preceding claims,
**characterized in that**
the molding is produced using aged material of which the recrystallization peak and the enthalpy of crystallization are higher than those of the unaged material.

29. Molding according to at least one of the preceding claims,
**characterized in that**
the molding is used in aerospace technology, in mechanical engineering, in medical technology, in automobile construction, in the sports industry, or in the electrical industry.

30. Process for the preparation of powder which comprises a mixture of diacid- and diamine-regulated polyamide and/or copolyamide,
**characterized in that**
as base material, a mixture composed of, firstly, a diacid-regulated polyamide powder or of a diacid-regulated copolyamide powder, obtained via treatment of an unregulated polyamide or copolyamide with a dicarboxylic acid as regulator, and, secondly, a diamine-regulated polyamide powder or diamine-regulated copolyamide powder, obtained via treatment of an unregulated polyamide or copolyamide with a diamine as regulator, is used.

31. Process according to Claim 30,
**characterized in that**
the treatment takes place via reaction of the unregulated polyamide or of the copolyamide during the polymerization.

32. Process according to Claim 30,
**characterized in that**
the treatment of the unregulated polyamide or of the copolyamide takes place via reaction of a highmolecular-weight polyamide or copolyamide with a regulator in the melt, in the solid phase, or in solution.

## Revendications

1. Procédé fonctionnant par couches, dans lequel des zones de la couche pulvérulente respective sont sélectivement fondues et, après refroidissement, solidifiées,
**caractérisé en ce**
**qu'**on utilise un mélange réutilisable de polyamide et/ou copolyamide régulé(s) par diacide et régulé(s) par diamine, qui présente un rapport du groupe terminal carboxy au groupe terminal amino ou du groupe terminal amino au groupe terminal carboxy inférieur à 5:1.

2. Procédé selon la revendication 1,
**caractérisé en ce**
**qu'**on utilise un mélange de polyamide et/ou copolyamide régulé(s) par diacide et régulé(s) par diamine, dont le diamètre moyen de grain est compris entre 30 et 100 µm.

3. Procédé selon la revendication 1,
**caractérisé en ce**
**qu'**on utilise un mélange de polyamide et/ou copolyamide régulé(s) par diacide et régulé(s) par diamine, dont le diamètre moyen de grain est compris entre 40 et 80 µm

4. Procédé selon au moins l'une quelconque des revendications 1 à 3,
**caractérisé en ce**
**qu'**on utilise un mélange de polyamide et/ou copolyamide régulé(s) par diacide et régulé(s) par diamine, qui présente un rapport du groupe terminal carboxy au groupe terminal amino ou du groupe terminal amino au groupe terminal carboxy inférieur à 3:1.

5. Procédé selon au moins l'une quelconque des revendications 1 à 3,
**caractérisé en ce**
**qu'**on utilise un mélange de polyamide et/ou copolyamide régulé(s) par diacide et régulé(s) par diamine, qui présente un rapport du groupe terminal carboxy au groupe terminal amino ou du groupe terminal amino au groupe terminal carboxy inférieur à 1,5:1.

6. Procédé selon au moins l'une quelconque des revendications 1 à 3,
**caractérisé en ce**
**qu'**on utilise un mélange de polyamide et/ou copolyamide régulé(s) par diacide et régulé(s) par diamine, qui présente un rapport du groupe terminal carboxy au groupe terminal amino ou du groupe terminal amino au groupe terminal carboxy inférieur à 1,2:1.

7. Procédé selon au moins l'une quelconque des revendications précédentes,
**caractérisé en ce que**
la poudre utilisée présente une surface BET inférieure à 15 m²/g.

8. Procédé selon au moins l'une quelconque des revendications précédentes,
**caractérisé en ce que**
la poudre utilisée présente une surface BET inférieure à 10 m²/g.

9. Procédé selon au moins l'une quelconque des revendications précédentes,
**caractérisé en ce que**
la poudre utilisée comporte un polyamide 12 régulé.

10. Procédé selon au moins l'une quelconque des revendications précédentes,
**caractérisé en ce que**
la poudre utilisée comporte un polyamide 11 régulé.

11. Procédé selon au moins l'une quelconque des revendications précédentes,
**caractérisé en ce que**
la poudre utilisée comporte un copolyamide régulé.

12. Procédé selon au moins l'une quelconque des revendications précédentes,
**caractérisé en ce que**
la poudre utilisée comporte un mélange de polyamide ou copolyamide régulé par diacide et régulé par diamine et non régulé.

13. Procédé selon au moins l'une quelconque des revendications précédentes,
**caractérisé en ce que**
la poudre utilisée comporte un mélange de polyamide ou copolyamide régulé par diacide et régulé par diamine et non régulé, la proportion de polyamide ou copolyamide régulé dans le mélange valant de 0,1 à 99,9 %.

14. Procédé selon au moins l'une quelconque des revendications précédentes,
**caractérisé en ce que**
la poudre utilisée comporte au moins une charge ou additif supplémentaire.

15. Procédé selon au moins l'une quelconque des revendications précédentes,
**caractérisé en ce que**
la poudre utilisée comporte comme charge des particules de verre.

16. Procédé selon au moins l'une quelconque des revendications précédentes,
**caractérisé en ce que**
la poudre utilisée comporte comme charge de la poudre d'aluminium.

17. Procédé selon au moins l'une quelconque des revendications précédentes,
**caractérisé en ce que**
la poudre utilisée comporte comme additif un agent ignifuge.

18. Procédé selon au moins l'une quelconque des revendications précédentes,
**caractérisé en ce que**
la poudre utilisée comporte au moins un agent auxiliaire d'écoulement.

19. Procédé selon au moins l'une quelconque des revendications précédentes,
**caractérisé en ce que**
la poudre utilisée comporte de 5 à 100 % de poudre recyclée, c'est-à-dire de poudre non fondue provenant d'un processus RP/RM précédent.

20. Procédé selon au moins l'une quelconque des revendications précédentes,
**caractérisé en ce**
**qu'**après vieillissement à chaud de la poudre utilisée le pic de recristallisation et/ou l'enthalpie de cristallisation, mesurés selon ISO 11357 à une vitesse de refroidissement de 20 K/min, de la poudre, ne se décalent pas vers des valeurs plus basses.

21. Procédé selon au moins l'une quelconque des revendications précédentes,
**caractérisé en ce**
**qu'**après vieillissement à chaud de la poudre utilisée le pic de recristallisation et/ou l'enthalpie de cristallisation, mesurés selon ISO 11357 à une vitesse de refroidissement de 20 K/min, se décalent vers des valeurs plus élevées.

22. Procédé selon au moins l'une quelconque des revendications précédentes,
**caractérisé en ce que**
la poudre utilisée présente une viscosité en solution, selon ISO 307 dans du m-crésol à 0,5 %, comprise entre 1,4 et 2.

23. Procédé selon au moins l'une quelconque des revendications précédentes,
**caractérisé en ce que**
la poudre utilisée présente une viscosité en solution, selon ISO 307 dans du m-crésol à 0,5 %, comprise entre 1,5 et 1,8.

24. Corps moulé, produit dans un procédé fonctionnant par couches selon l'une quelconque des revendications précédentes, dans lequel des zones de la couche pulvérulente respective sont sélectivement fondues et, après refroidissement, solidifiées,
**caractérisé en ce que**
le corps moulé comporte un mélange de polyamide ou copolyamide régulé par diacide et régulé par diamine.

25. Corps moulé selon au moins l'une quelconque des revendications précédentes,
**caractérisé en ce que**
le corps moulé comporte un mélange de polyamide 12 régulé par diacide et régulé par diamine.

26. Corps moulé selon au moins l'une quelconque des revendications précédentes,
**caractérisé en ce que**
le corps moulé comporte un mélange de polyamide ou copolyamide régulé par diacide et régulé par diamine et non régulé et **en ce que** la proportion de polyamide régulé dans le mélange de polyamides vaut de 0,1 à 100 %.

27. Corps moulé selon au moins l'une quelconque des revendications précédentes,
**caractérisé en ce**
**qu'**on produit le corps moulé en utilisant du matériau vieilli qui présente un pic de recristallisation et une enthalpie de cristallisation qui ne sont chacun pas inférieurs à ceux du matériau non vieilli.

28. Corps moulé selon au moins l'une quelconque des revendications précédentes,
**caractérisé en ce**
**qu'**on produit le corps moulé en utilisant du matériau vieilli qui présente un pic de recristallisation plus élevé et une enthalpie de cristallisation plus élevée que le matériau non vieilli.

29. Corps moulé selon au moins l'une quelconque des revendications précédentes,
**caractérisé en ce que**
le corps moulé trouve une utilisation dans l'industrie aérospatiale, la construction de machines, la technique médicale, la construction d'automobiles, l'industrie du sport ou l'industrie électrique.

30. Procédé pour la préparation d'une poudre qui comporte un mélange de polyamide et/ou copolyamide régulé(s) par diacide et régulé(s) par diamine,
**caractérisé en ce**
**qu'**on utilise comme matériau de base un mélange, d'une part, d'une poudre de polyamide ou copolyamide régulé par diacide, qui est obtenue par un traitement d'un polyamide ou copolyamide non régulé, par un acide dicarboxylique en tant que régulateur, d'autre part, d'une poudre de polyamide ou copolyamide régulé par diamine, qui est obtenue par un traitement d'un polyamide ou copolyamide non régulé, par une diamine en tant que régulateur.

31. Procédé selon la revendication 30,
**caractérisé en ce que**
le traitement s'effectue pendant la polymérisation, par mise en réaction du polyamide ou du copolyamide non régulé.

32. Procédé selon la revendication 30,
**caractérisé en ce que**
le traitement du polyamide ou du copolyamide non régulé s'effectue par mise en réaction d'un polyamide ou copolyamide de masse moléculaire élevée avec un régulateur dans la masse fondue, en phase solide ou en solution.
